# EUROPEAN PATENT APPLICATION

(11) **EP 4 271 056 A1**
(43) Date of publication of application: **01.11.2023**
(21) Application number: 22169826.9
(22) Date of filing: 25.04.2022
(51) Int. Cl.: H04W 52/02

(54) **USER EQUIPMENT AND BASE STATION INVOLVED IN POWER SAVING PROCEDURES**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP); SHARIATMADARI, Hamidreza, 63225 Langen (DE)
(74) Representative: Grünecker Patent- und Rechtsanwälte PartG mbB

(57) **Abstract**

The present disclosure relates to a user equipment, UE, comprising the following. A receiver receives, from a base station, a configured-resources skipping indication, wherein the configured-resources skipping indication indicates that the UE is allowed to perform one or more of the following actions:
• skipping a process related to one or more configured uplink resource grants, and
• skipping a process related to one or more semi-persistent, SPS, downlink resource configurations,

A processing circuitry of the UE skips, in response to the received configured-resources skipping indication, the one or more processes during a configured-resources skipping time period.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GPP TR 38.913 e.g. version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for a UE to perform improved power saving procedures.

In an embodiment, the techniques disclosed here feature a user equipment, UE, comprising the following. A receiver receives, from a base station, a configured-resources skipping indication, wherein the configured-resources skipping indication indicates that the UE is allowed to perform one or more of the following actions:
- skipping a process related to one or more configured uplink resource grants, and
- skipping a process related to one or more semi-persistent, SPS, downlink resource configurations,

A processing circuitry of the UE skips, in response to the received configured-resources skipping indication, the one or more processes during a configured-resources skipping time period.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig.** 1: shows an exemplary architecture for a 3GPP NR system;
- **Fig.** 2: is a schematic drawing that shows a functional split between NG-RAN and 5GC,
- **Fig.** 3: is a sequence diagram for RRC connection setup/reconfiguration procedures,
- **Fig.** 4: is a schematic drawing showing usage scenarios of Enhanced mobile broadband (eMBB), Massive Machine Type Communications (mMTC) and Ultra Reliable and Low Latency Communications (URLLC),
- **Fig.** 5: is a block diagram showing an exemplary 5G system architecture for a non-roaming scenario,
- **Fig.** 6: illustrates the relationship between Bandwidth Parts, Control Resource Sets (CORESETS), search spaces, search space sets, and PDCCH candidates,
- **Fig. 7**: illustrates an exemplary time-domain structure in a communication system, such as 5G NR, including radio frames, subframes, slots, and OFDM symbols for different subcarrier spacings,
- **Fig. 8**: illustrates an exemplary and simplified structure of a UE and gNB,
- **Fig. 9**: illustrates a structure of the UE according to an exemplary implementation of the improved power saving procedure according to the first solution,
- **Fig. 10**: illustrates a flow diagram for the UE behavior according to an exemplary implementation of the improved power saving procedure according to the first solution,
- **Fig. 11**: illustrates a structure of the base station according to an exemplary implementation of the improved power saving procedure according to the first solution,
- **Fig. 12**: illustrates a flow diagram for the base station behavior according to an exemplary implementation of the improved power saving procedure according to the first solution,
- **Fig. 13**: is a signaling diagram illustrating an exemplary exchange between the UE and the gNB for an exemplary implementation of the improved power saving procedure according to the first solution,
- **Fig. 14**: illustrates a structure of the UE according to an exemplary implementation of the improved power saving procedure according to the second solution,
- **Fig. 15**: illustrates a flow diagram for the UE behavior according to an exemplary implementation of the improved power saving procedure according to the second solution,
- **Fig. 16**: illustrates a structure of the base station according to an exemplary implementation of the improved power saving procedure according to the second solution,
- **Fig. 17**: illustrates a flow diagram for the base station behavior according to an exemplary implementation of the improved power saving procedure according to the second solution,
- **Fig. 18**: illustrates a structure of the UE according to an exemplary implementation of the improved power saving procedure according to the third solution,
- **Fig. 19**: illustrates a flow diagram for the UE behavior according to an exemplary implementation of the improved power saving procedure according to the third solution,
- **Fig. 20**: illustrates a structure of the UE according to an exemplary implementation of the improved power saving procedure according to the fourth solution,
- **Fig. 21**: illustrates a flow diagram for the UE behavior according to an exemplary implementation of the improved power saving procedure according to the fourth solution,
- **Fig. 22**: illustrates a structure of the UE according to an exemplary implementation of the improved power saving procedure according to the fifth solution, and
- **Fig. 23**: illustrates a flow diagram for the UE behavior according to an exemplary implementation of the improved power saving procedure according to the fifth solution.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

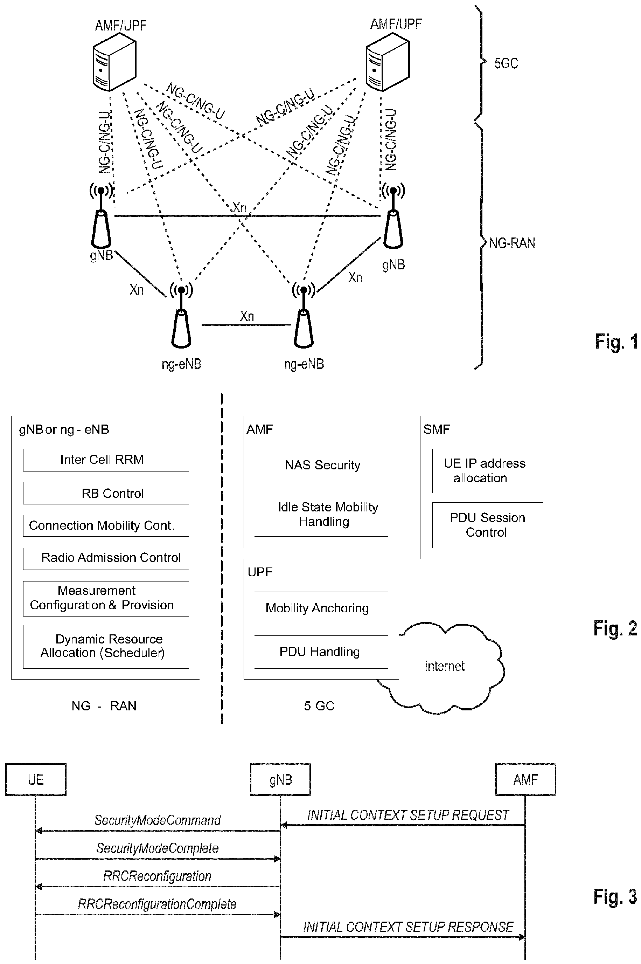

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig.** 1 (see e.g. 3GPP TS 38.300 e.g. v16.8.0, section 4).

The user plane protocol stack for NR (see e.g. 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g. v17.1.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

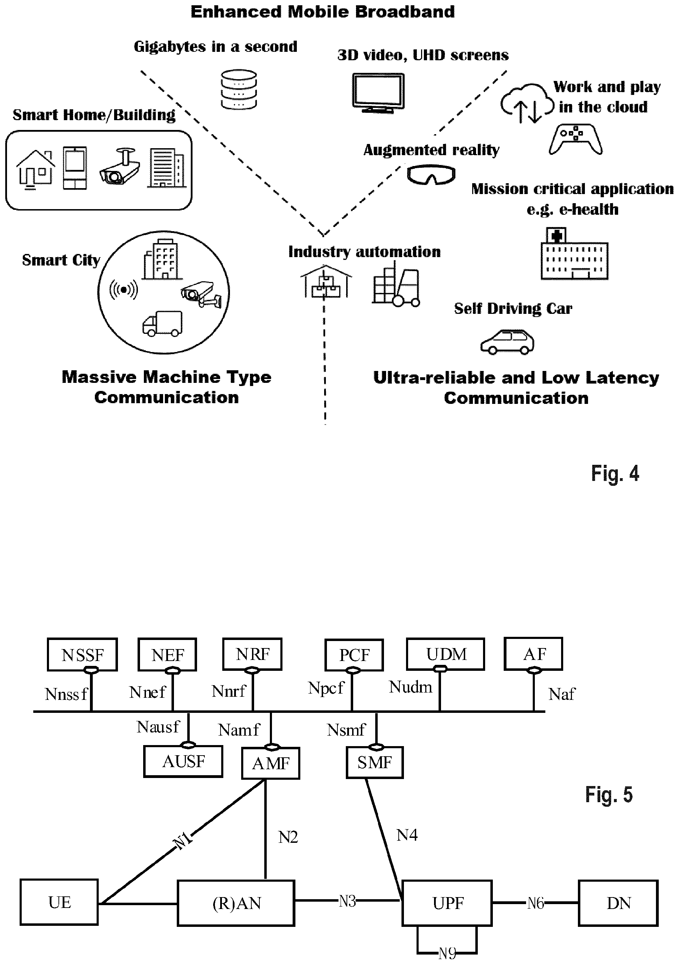

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g. 3GPP TS 23.501 e.g. v16.9.0 or v17.4.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Bandwidth Parts - BWP

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v16.6.0.

Switching between configured BWPs may be achieved in different ways. Operation of Bandwidth parts in uplink and downlink is e.g. defined in a 5G NR compliant implementation in 3GPP 38.321 e.g. v16.8.0 section 5.15. BWPs can be switched for instance by means of downlink control information (DCIs) (e.g. using a Bandwidth part indicator in DCI format 0_1 (UL grant) and DCI format 1_1 (DL schedule)), using the bwp-inactivity Timer, using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

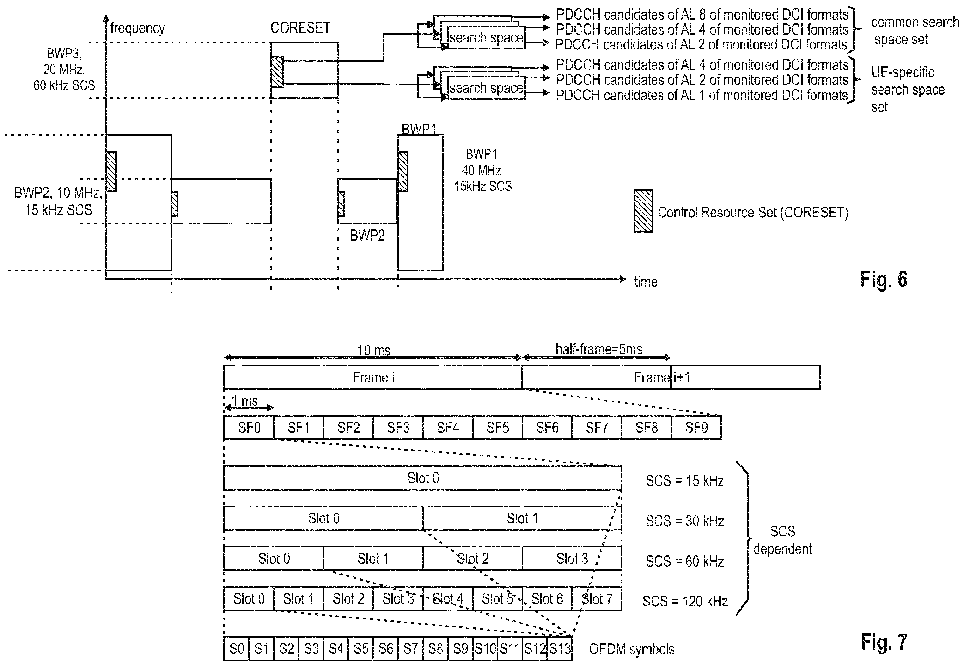

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

According to one exemplary 5G NR compatible implementation in line with 3GPP 38.331 e.g. v16.8.0, different RRCReconfiguration information elements can be used.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| **DCI format** | **Usage** |
|---|---|
| 0_0 | Scheduling of PUSCH in one cell |
| 0 1 | Scheduling of PUSCH in one cell |
| 0 2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2 0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2 4 | Cancel UL transmission |
| 2 5 | Notify availability of soft resources |
| 2 6 | Notify power saving information |
| 3 0 | Scheduling for Sidelink, NR PSCCH and NR PSSCH in one cell; |
| 3 1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a Type0A-PDCCH CSS set configured by *searchSpaceOtherSystemInformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *pagingSearchSpace* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, Fig. 6 provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

### Search Space Set group switching

In 3GPP, the concept of configuring at least two groups of search space sets (abbreviated as SSS or SS set) for monitoring of the PDCCH has been discussed. This concept can be e.g. specifically useful for operation in the unlicensed radio spectrum, where the gNB has to first acquire the channel in order to then be allowed to transmit a PDCCH. For instance, the different SSS groups can differ by when and/or how long the UE is required to monitor the PDCCH during a slot.

The various groups may comprise various search space sets. A single search space set can be part of more than one SSS group.

According to one exemplary aspect of the concept, the UE can be configured to switch between the groups. One particular exemplary implementation of a search space set switching is defined in the 3GPP specs for 5G NR, particularly 3GPP TS 38.213 e.g. v17.1.0, section 10.4 *"Search space set group switching and skipping of PDCCH monitoring".*

In brief, the switching between the different SSS groups is controlled by two mechanisms, an SSS group switching indication (called in the exemplary 3GPP 5G implementation, the search space set group switching flag field) and a switching timer (called in the exemplary 3GPP 5G implementation searchSpaceSwitchTimer). For details on the two mechanisms reference is made to the above cited section 10.4 of TS 38.213.

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7****.**

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table).

### SPS in downlink and Configured grant in uplink

In the downlink, the gNB can dynamically allocate resources to UEs via the C-RNTI on PDCCH(s) (see e.g. DCIs above). Similarly, in the uplink, the gNB can dynamically allocate resources to UEs via the C-RNTI on PDCCH(s) (see e.g. DCIs above). In addition to dynamically allocating downlink resources and uplink resources, 5G NR also provides scheduling enhancements according to which resource allocation can be implemented in 5G NR based on semi-persistent scheduling (SPS) in the downlink and based on a configured grant CG) in the uplink.

In the downlink, semi-persistent-scheduling (SPS) functionality was adopted in 5G NR as a further development of SPS as used for the previous communication system of LTE, in which it is applicable for both uplink and downlink. Furthermore, in LTE, the SPS configuration is typically dedicated to a single device. If the device does not need the allocated periodic resources (e.g. data is only transmitted for specific events, such as a collision warning), the SPS resources that are no used by the UE are wasted.

According to one 5G NR compliant example implementation, the RRC defines the relevant parameters for SPS. An RRC information element *SPS-Config* is defined in 3GPP 38.331 e.g. V16.7.0 for configuring the downlink semi-persistent transmission. For instance, the RRC defines the periodicity of the configured downlink assignments, the number of HARQ processes, MCS, etc.

The UE may be configured with several (e.g. up to 8) active configured downlink assignments for one BWP of a serving cell. When more than one is configured:
- The network decides which of these configured downlink assignments are active at a time (including all of them); and
- Each configured downlink assignment is activated separately using a DCI command, and deactivation of configured downlink assignments is done using a DCI command, which can either deactivate a single configured downlink assignment or multiple configured downlink assignments jointly.

A PDCCH addressed to the CS-RNTI can either signal and activate the configured downlink assignments, while a PDCCH addressed to CS-RNTI can indicate that the downlink assignment can be implicitly reused according to the periodicity defined by RRC, until deactivated. When required, retransmissions are e.g. explicitly scheduled on PDCCH(s).

SPS is particularly useful for periodic downlink data transmissions such as Voice over IP (VoIP) services. A base station configures the SPS radio resources, and the UE can use these periodic radio resources, without the base station individually sending a downlink resource grant for each instance.

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station. This can be implemented by so-called configured grants (CG).

In addition, by using configured grants, multiple devices (UEs) may be allowed to share periodic radio resources (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 and Release 17, namely Type 1 and Type 2 (see 3GPP 38.300 e.g.v16.8.0: "NR; NR and NG-RAN Overall Description; Stage 2 (Release 16)", section 10.3). According to this exemplary implementation of 3GPP TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called *ConfiguredGrantConfig.* (see 3GPP TS 38.331 v16.7.0, section 6.3.2 *"Radio resource control information elements").*

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

Retransmissions other than repetitions are explicitly allocated via PDCCH(s) or via configuration of a retransmission timer.

### UE power saving enhancements for NR

User experience is key to 5G/NR success, not only in terms of experienced data rates and latency but also importantly UE power consumption. UE Power saving enhancements are therefore vital to the success of 5G/NR. In Rel-16, several useful power saving schemes were specified, including power saving signal/DCI as enhancement to connected-mode DRX (cDRX), additional adaptations to maximum MIMO layer number, SCell dormancy behaviour and cross-slot scheduling as enhancements to BWP framework, RRM relaxation as enhancements for idle/inactive-mode power consumption, and UE assistance information.

In Rel-17, additional enhancements are required to address outstanding issues in Rel-16, including idle/inactive-mode power consumption in NR SA deployments, considering both eMBB UEs and Reduced Capability NR Devices, connected-mode power consumption with FR2 deployments, etc. One particular example is to study and specify extension(s) to Rel-16 DCI-based power saving adaptation during DRX Active Time for an active BWP, including PDCCH monitoring reduction when C-DRX is configured (RAN1).

Another power saving study item relates to XR-specific Power Saving in RAN 1 and RAN 2. In particular, power saving techniques are studied for XR (eXtended Reality), e.g. to accommodate XR service characteristics, such as periodicity, multiple flows, jitter, latency, reliability, etc. One technique could relate to enhancing PDCCH monitoring. A further study item relating to XR refers to XR-specific capacity improvements in RAN 1 and RAN 2, and involve studying mechanisms that provide more efficient resource allocation and scheduling for XR service characteristics, such as periodicity, multiple flows, jitter, latency, reliability, etc. Techniques could relate to SPS and CG enhancements and Dynamic scheduling/grant enhancements.

Energy saving can be implemented for the UE, including mechanisms for:
- a UE-specific BWP adaptation and use of a dormancy SCell (using DCI format 0_1 (for UL) and DCI format 1_1 (for DL),
- a UE or UE-group specific time domain adaptation by DRX and using the DCI format 2_6
- a UE-group-specific CSI-RS / TRS availability indication for IDLE/INACTIVE UEs by DCI format 2_7 and paging
- DCI-based PDCCH monitoring adaptation by PDCCH skipping and SSSG (Search Space Set Group) switching

### DCI-based PDCCH Skipping

In brief, PDCCH Skipping implements the concept that the UE skips monitoring the PDCCH (i.e. downlink control channel) so as to save power at the UE side. For instance, in one exemplary implementation discussed for 3GPP, PDCCH skipping is indicated to the UE by the gNB via a DCI. Based on such a DCI-based PDCCH skipping, the gNB thus has control over this power-saving mechanism and can activate it e.g. when there is no data to be transmitted to the UE.

In one example, the DCI can indicate a duration of time for which the UE is allowed to skip the PDCCH monitoring and thus to save power. During said duration of time, the UE does not expect a reception of a PDCCH (e.g. a DCI for uplink grant or downlink resource allocation).

In the following an exemplary 5G NR compliant of the PDCCH skipping mechanism will be described. However, it should be noted that the described PDCCH skipping mechanism is only a detailed example, illustrating one possible implementation of the concepts underlying the PDCCH skipping mechanism, but should not be considered as limiting the PDCCH skipping mechanism to just this exemplary implementation.

In an exemplary 5G NR compliant implementation, DCI-based PDCCH skipping is implemented according to the definitions one or more of 3GPP TS 38.213 e.g. v17.1.0, section 10.4 "Search space set group switching and skipping of PDCCH monitoring", of 3GPP TS 38.212 e.g. v17.1.0 and its sections 7.3.1.1.2 , 7.3.1.1.3, 7.3.1.2.2, 7.3.1.2.3 (respectively relating to DCI Formats 0_1, 0_2, 1_1 and 1_2), and of a future Rel. 17 version of 3GPP TS 38.331 (defining the content of relevant Information Elements, such as PDCCHSkippingDurationList-r17).

In such an exemplary 5G NR compliant implementation, the UE can be provided with a set of duration by the RRC Information Element *PDCCHSkippingDurationList.* According to the present exemplary implementation (see 38.331), at most three values can be defined thereby, in units of slots, and for each skipping duration different values are valid for different subcarrier spacing, e.g.:
- {1,2,3,...,20,30, 40, 50, 60, 80, 100} are valid for the 15 kHz SCS,
- {1,2,3,...,40, 60, 80, 100, 120,160,200} are valid for 30 kHz SCS,
- {1,2,3,...,80, 120, 160, 200, 240, 320,400} are valid for 60kHz SCS,
- {1,2,3,...,160, 240, 320,400, 480, 640,800} are valid for 120kHz SCS,
- {4,8,12,...,640, 960, 1280,1600, 1920, 2560,3200} are valid for 480kHz SCS, and
- {8,16,24,..., 1280, 1920, 2560,3200, 3840, 5120,6400} are valid for 960kHz SCS.

The DCI then indicates among the set of durations defined by *PDCCHSkippingDurationList* one duration for which the UE is allowed to skip monitoring the PDCCH. A PDCCH monitoring adaptation field in one of DCI Formats 0_1, 0_1, 1_1 and 1_2 (see 38.212) may include 0, 1 or 2 bits, depending on the number of durations to be indicated by the *PDCCHSkippingDurationList,* e.g. 1 bit if UE is configured with only one duration, 2 bits if the UE is configured with more than one duration.

The UE then can interpret the PDCCH monitoring adaptation field of 1 or 2 bits to indicate either no skipping of PDCCH monitoring or skipping PDCCH monitoring, in accordance with the indicated value. Details can be obtained from TS 38.213, section 10.4, including an exemplary implementation according to which the PDCCH monitoring indicates
- no skipping of PDCCH monitoring for e.g. 0 value, or 00 value, or
- skipping PDCCH monitoring for a duration provided by the first value in the set of duration of *PDCCHSkippingDurationList* (e.g. 1 value, or 01 value), or
- skipping PDCCH monitoring for a duration provided by the second value in the set of duration of *PDCCHSkippingDurationList* (e.g. 10 value), or
- skipping PDCCH monitoring for a duration provided by the third value in the set of duration of *PDCCHSkippingDurationList* (e.g. 11 value).

In this 5G NR compliant implementation, after being indicated that UE is allowed to skip PDCCH monitoring, the UE can actually start skipping the PDCCH monitoring at the beginning of a first slot that is after the last symbol of the PDCCH reception providing the DCI format with the PDCCH monitoring adaptation field.

### Further Improvements

In the above, the study item for UE power saving was briefly presented. The inventors have identified the need for supporting and improving on UE power saving.

The inventors have thus identified the possibility of providing improved power saving procedures, for allowing to save power at the UE side. The present invention relates to different solutions and variants for such improved power saving procedures.

### Embodiments

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The expression **"configured resources"** here shall cover one or both of periodic radio resources in the uplink and downlink. The term **"periodic radio resources"** used in the application is to be broadly understood as referring to radio resources (e.g. in the time and/or frequency domain) that occur periodically in time.

These **"configured resources"** (e.g. *"periodic radio resources")* can be allocated to a UE (or more UEs) in advance by the corresponding base station (serving the UE) and are thus already configured and usable by the UE and base station, without the need that the UE first has to request radio resources and the BS needs to individually grant the resources. Correspondingly, configured resources in the downlink can be used by the base station to transmit downlink data to the UE, and can also be called semi-persistent, SPS, resources or SPS downlink resources. One exemplary implementation of such configured downlink resources is presented above regarding SPS for 3GPP 5G. Further, configured resources in the uplink can be used by the UE to transmit uplink data to the base station, and can also be called configured grant, CG, or CG uplink grant. One exemplary implementation of such configured uplink resources is presented above regarding CG for 3GPP 5G.

The term **"skipping",** e.g. in **"skipping a process",** as used herein is to be understood e.g. as not performing or as not continuing, e.g. with the process, for a particular period of time (can also be called "duration"). After said time period, the skipped process is performed automatically again, i.e. without the need of a further instruction (e.g. from the base station). Put differently, the process is stopped (only) temporarily and then resumed again (after said skipping time period).

The term **"continuing",** e.g. in **"continuing a process"** or **"continuing to monitor",** as used herein is to be understood e.g. as not stopping or as not skipping, e.g. to monitor. For instance, the term "continuing" can be understood as the counter operation of the above discussed term "skipping".

The term **"monitoring"** or **"monitor"** can be broadly understood e.g. as the process of trying to decode a possible candidate for receiving a DCI message, e.g. based on a particular format. Such a decoding attempt can also be called blind decoding.

The expression **"search space set"** can be broadly understood as a set of search spaces, with a plurality of search spaces, each search space comprising one or a plurality of possible candidates for receiving a DCI message. For instance, a **"search space"** groups various candidates with the same aggregation level but with a different format of the DCI message. In turn, for instance, the set of search spaces may then comprise search spaces of different aggregation levels, but being associated with a same set of time-frequency resources to be monitored (e.g. a same CORESET). Particular exemplary implementations of search space sets are given by the 3GPP 5G NR standards, as explained above.

The expressions **"monitoring occasion",** "downlink control channel monitoring occasion", "PDCCH monitoring occasion" and similar expressions are to be understood broadly, e.g. as a period of time (e.g. a set of one or more consecutive symbols) of a time slot where the UE is configured to monitor the corresponding downlink control channel (e.g. PDCCH, e.g. according to PDCCH candidates). For example, the UE determines monitoring occasions for each search space and search space set it is configured with.

The term **"counter"** can be broadly understood, e.g. as an operation of counting something, such as a number of specific occurrences. As an alternative, the term **"timer"** may be used instead, also in the context of counting.

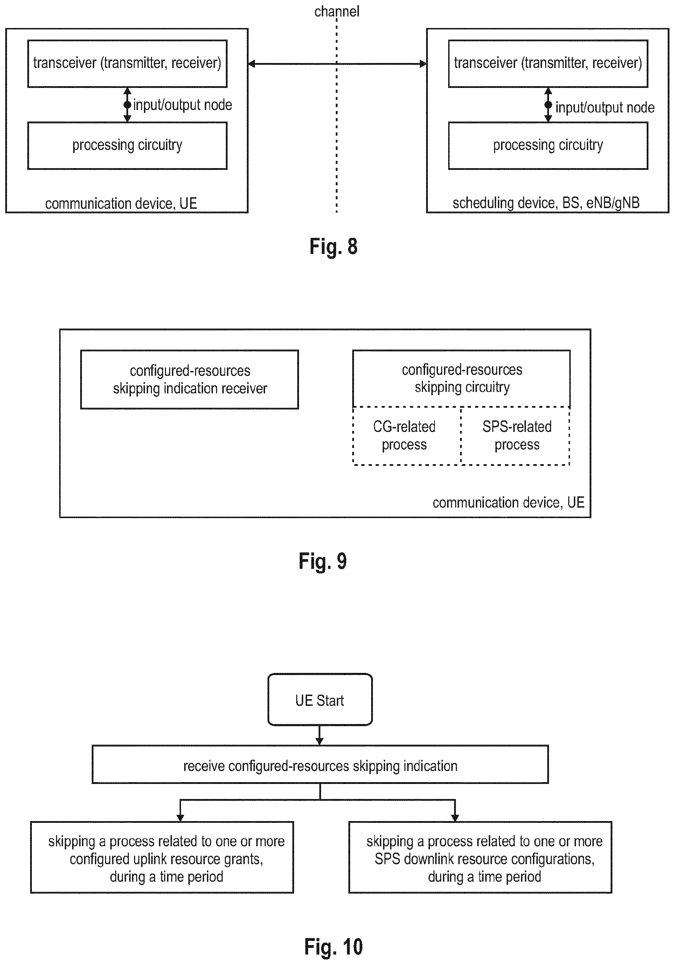

**Fig. 8** illustrates a general, simplified and exemplary block diagram of a user equipment (also termed communication device) and a scheduling device (here exemplarily assumed to be located in the base station, e.g. the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved power saving procedures will be described in the following. In said connection, improved UEs, improved base stations and improved integrated circuits are presented, which participate separately or together in the improved power saving procedures. Corresponding methods for the UE behavior and the base station behavior are provided as well. The integrated circuits correspond to the UE and base station, and respectively their behavior.

As an overview, according to a first solution, an improved power saving procedure is presented, according to which the UE is instructed to skip either one or both of processes related to SPS configurations and CGs.

According to a second solution, an improved power saving procedure is presented, which enhances a control channel monitoring skipping procedure to also allow to instruct the UE to skip either one or both of processes related to SPS configurations and CGs.

According to a third solution, an improved power saving procedure is presented, which allows to instruct the UE to activate or deactivate either one or both of SPS configurations and CGs.

According to a fourth solution, an improved power saving procedure is presented, which allows to instruct the UE to switch either one or both of the currently-used SPS configuration(s) and CG(s).

According to a fifth solution, an improved power saving procedure is presented, which enhances an SSS (Search Space Set) Group switching procedure to also allow to instruct the UE to switch either one or both of the currently-used SPS configuration(s) and CG(s).

According to a sixth solution, an improved power saving procedure is presented, which allows to combine two or more or all of the above indicated first to fifth solutions, so as to achieve synergetic effects.

### First Solution - SPS/CG skipping

As briefly mentioned in the above overview, an improved power saving procedure is presented herein, according to which the UE is instructed to skip either one or both of processes related to SPS configurations and CGs.

**Fig.** 9 illustrates a simplified and exemplary UE structure according to an exemplary implementation of the improved power saving procedure of the first solution, which can be implemented based on the general UE structure explained in connection with Fig. 8. The various structural elements of the UE illustrated in said Fig. 9 can be interconnected between one another e.g. with corresponding input/output nodes (not shown) e.g. in order to exchange control and user data and other signals. Although not shown for illustration purposes, the UE may include further structural elements.

As apparent from Fig. 9, the UE may include a configured-resources skipping indication receiver and a configured-resources skipping circuitry. According to this first solution, the skipping circuitry can participate in the actions of skipping one or more of CG-related processes and SPS-related process. In this context, a CG-related process is a process that is related to one or more configured uplink resource grants, and an SPS-related process is a process that is related to one or more SPS downlink resource configurations.

In the present case as will become apparent from the below disclosure, the receiver of the UE can thus be exemplarily configured to at least partly perform one or more of receiving the configured-resources skipping indication, receiving downlink data, receiving downlink control information, receiving associations and configuration messages from the base station, etc.

In the present case as will become apparent from the below disclosure, the processing circuitry of the UE can thus be exemplarily configured to at least partly perform one or more of skipping a process during a time period, determining when to begin the skipping action, determining the configured-resources skipping time period, determining the SPS downlink resource configurations to be skipped, determining the configured uplink resource grants to be skipped, etc.

In the present case as will become apparent from the below disclosure, the transmitter of the UE can thus be exemplarily configured to at least partly perform one or more of transmitting uplink data to the base station, transmitting uplink control information regarding reception feedback, etc.

One exemplary procedure as will be disclosed in more detail further below is implemented by a UE that includes the following. A receiver receives, from a base station, a configured-resources skipping indication, wherein the configured-resources skipping indication indicates that the UE is allowed to perform one or more of the following actions:
- skipping a process related to one or more configured uplink resource grants, and
- skipping a process related to one or more semi-persistent, SPS, downlink resource configurations.

The UE comprises processing circuitry, which in response to the received configured-resources skipping indication, skips the one or more processes during a configured-resources skipping time period.

A corresponding exemplary method comprises the following steps performed by a UE:
receiving, from a base station, a configured-resources skipping indication, wherein the configured-resources skipping indication indicates that the UE is allowed to perform one or more of the following actions:
   - skipping a process related to one or more configured uplink resource grants, and
   - skipping a process related to one or more semi-persistent, SPS, downlink resource configurations,
skipping, in response to the received configured-resources skipping indication, the one or more processes during a configured-resources skipping time period.

A corresponding sequence diagram for an exemplary UE behaviour in line with the above-discussed UE and UE method is illustrated in **Fig. 10****.** As apparent therefrom, the UE receives the configured-resources skipping indication and thus proceeds, during a corresponding skipping time period, to skip UE processes related to one or more configured uplink resource grants and to skip UE processes related to one or more SPS downlink resource configurations. In Fig. 10, it is exemplarily assumed that the configured-resource skipping indication indicates to skip both a CG-related UE process and an SPS-related UE process; however, it is also possible that the configured-resource skipping indication indicates to skip only one of a CG-related UE process and an SPS-related UE process.

Although not illustrated in Fig. 10, the UE may resume the skipped UE processes after the skipping time period. For instance, after the skipping time period ends, the UE may start again with the skipped UE processes, be it the CG-related UE process or the SPS-related UE process.

The above-described improved power saving procedure thus achieves the object and overcomes at least some of the drawbacks explained above. In particular, the UE is able to save power, because the UE does not perform certain UE processes.

Some exemplary implementations of the improved power saving procedure also involve the base station, to which the UE is currently connected (termed e.g. serving base station because the base station serves the UE). Correspondingly, the improved power saving procedure also provides an improved base station that participates therein.

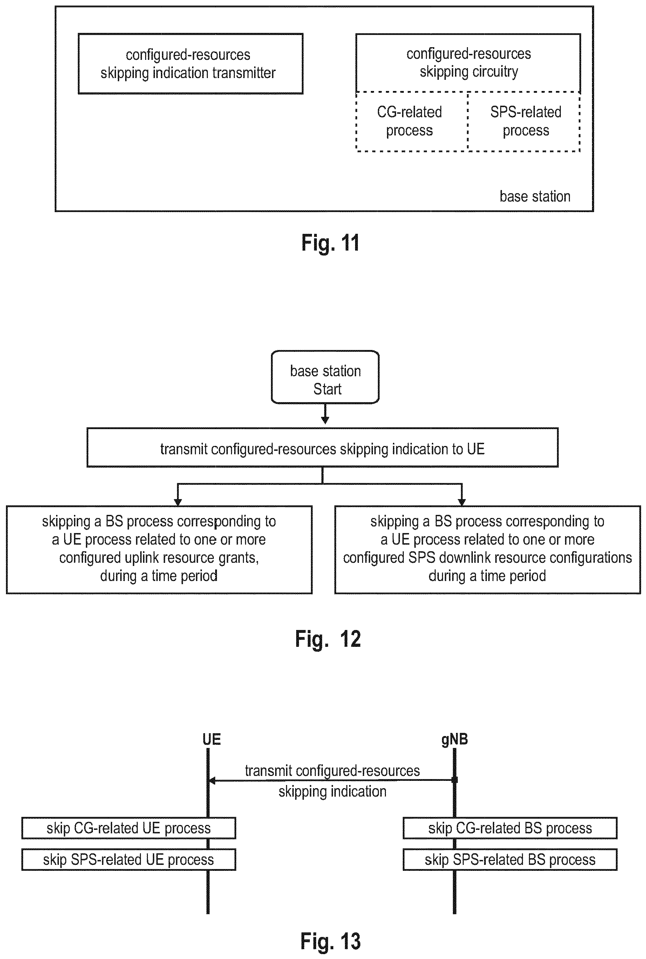

Fig. **11** illustrates a simplified and exemplary base station structure according to an exemplary implementation of the improved power saving procedure of the first solution, which can be implemented based on the general base station structure explained in connection with Fig. 8. The various structural elements of the base station illustrated in said Fig. 11 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a configured-resource skipping indication transmitter and a configured-resources skipping circuitry. According to this first solution, the skipping circuitry can participate in the actions of skipping one or more of CG-related processes and SPS-related process at the base station.

In the present case as will become apparent from the below disclosure, the receiver of the base station can thus be exemplarily configured to at least partly perform one or more of receiving, from the UE, uplink data and uplink control information regarding reception feedback etc.

In the present case as will become apparent from the below disclosure, the processing circuitry of the base station can thus be exemplarily configured to at least partly perform one or more of skipping BS-processes that correspond to UE-processes to be skipped by the UE, determining the configured-resources skipping time period, continuing to perform BS-processes, determining SPS-downlink resource configurations to be skipped, determining the configured uplink resource grants to be skipped, etc.

In the present case as will become apparent from the below disclosure, the transmitter of the base station can thus be exemplarily configured to at least partly perform one or more of transmitting the configured-resources skipping indication, transmitting downlink data, transmitting downlink control information, transmitting associations and configuration messages to the UE, etc.

One exemplary procedure as will be disclosed in more detail further below is implemented by a base station that includes the following. A transmitter transmits to a user equipment, UE, a configured-resources skipping indication, wherein the configured-resources skipping indication indicates that the UE is allowed to perform one or more of the following actions:
- skipping a process related to one or more configured uplink resource grants, and
- skipping a process related to one or more semi-persistent, SPS, downlink resource configurations,

The base station includes processing circuitry, which in response to the transmitted configured-resources skipping indication, skips, during a configured-resources skipping time period, to perform base station processes that correspond to the one or more processes to be skipped by the UE.

A corresponding method comprises the following steps performed by the base station:
transmitting to a user equipment, UE, a configured-resources skipping indication, wherein the configured-resources skipping indication indicates that the UE is allowed to perform one or more of the following actions:
- skipping a process related to one or more configured uplink resource grants, and
- skipping a process related to one or more semi-persistent, SPS, downlink resource configurations,

In response to the transmitted configured-resources skipping indication, the processing circuitry of the base station skips, during a configured-resources skipping time period, to perform base station processes that correspond to the one or more processes to be skipped by the UE.

A corresponding sequence diagram for an exemplary base station behavior in line with the above-discussed base station and corresponding method is illustrated in **Fig. 12****.** The sequence diagram illustrates an exemplary and simplified implementation of the above presented base station method.

**Fig. 13** illustrates a simplified and exemplary interaction between the improved UE and improved base station (here e.g. gNB) of the above discussed improved power saving procedure of the first solution. In this solution presented in Fig. 13, the interaction first includes the transmission of the configured-resources skipping indication from the base station to the UE. Then, in line with the configured-resources skipping indication, the UE skips respective CG-related and SPS-related UE processes and the base station (here in Fig. 13 illustrated as e.g. gNB) skips respective CG-related and SPS-related BS processes.

Similarly to Fig. 10, in Fig. 12 and 13 it is exemplarily assumed that the configured-resource skipping indication results in the UE and BS skipping both a CG-related process and an SPS-related process; however, it is also possible that the configured-resources skipping indication results in the UE and BS skipping only one of a CG-related process and an SPS-related process.

In the following, more specific implementations and variants of the above discussed operations of the first solution will be described. The description will be presented mainly from the UE side, but a corresponding description applies to the base station side as well . Different solutions are presented for allowing energy saving at the UE side.

It is exemplarily assumed that the UE is configured with SPS resources in the downlink based on corresponding SPS downlink resource configurations, such as the RRC IE *SPS-Config* used in an implementation that is compliant with the 5G NR standard presented above. Therefore, periodic downlink resources (also called periodic downlink occasions, because downlink data transmission may occur) are configured, which can be used by the base station to transmit downlink data to the UE. The configuration of SPS resources in the downlink typically involves that the UE and BS perform certain processes related to the SPS configurations. Such SPS-related processes for instance involve that the UE monitors downlink resources according to the corresponding SPS configurations so as to be able to receive downlink data from the BS, and e.g. also involve the transmission of transmission feedback (such as HARQ ACK or NACK) for the downlink data transmitted by the BS using the monitored downlink resources of the corresponding SPS configurations, and e.g. also involves monitoring the downlink control channel (e.g. PDCCH) for downlink control information (e.g. DCI) regarding the deactivation of already-activated SPS configurations and regarding the activation of currently-deactivated SPS configurations.

The BS performs SPS-related BS-processes corresponding to the UE side, included that the BS uses downlink resources according to the corresponding SPS configurations so as to transmit downlink data to the UE, that the BS monitors uplink resources to be able to receive transmission feedback (such as HARQ ACK or NACK) for the downlink data transmitted by the BS using the monitored downlink resources of the corresponding SPS configurations, and that the base station transmits downlink control information on the downlink control channel regarding the deactivation or activation of SPS configurations.

Other SPS-related processes not mentioned above may be performed at the UE and BS as well.

In addition or alternatively, it is exemplarily assumed that the UE is configured with CG resources in the uplink based on corresponding CG grants, such as the configured grants used in an implementation which is compliant with the 5G NR standard presented above. The first solution can apply to CGs of Type 1 and Type 2 of the 5G NR standards. Therefore, periodic uplink resources (also called periodic uplink opportunities, because these represent opportunities for the UE to transmit uplink data) are configured, which can be used by the UE to transmit uplink data to the base station.

The configuration of CG in the uplink involves that the UE and BS perform certain processes related to these CG grants. Such CG-related processes for instance involve that the UE transmits uplink data using the uplink resources of these CGs, and e.g. also involves that the UE monitors for the reception of transmission feedback (such as HARQ ACK or NACK) from the BS for the uplink data transmitted using these CG resources, and e.g. also involves monitoring the downlink control channel (e.g. PDCCH) for downlink control information (e.g. DCI) regarding the deactivation of already-activated CGs and regarding the activation of currently-deactivated CGs.

The BS performs CG-related BS-processes corresponding to the UE side, including that the base station monitors uplink resources of the CGs so as to be able to receive uplink data, that the base station transmits transmission feedback (such as HARQ ACK or NACK) to the UE for the uplink data transmitted by the UE using these CG resources, and that the base station transmits downlink control information on the downlink control channel regarding the deactivation or activation of CGs.

Other CG-related processes not mentioned above may be performed at the UE and BS as well.

According to the above presented broad implementation of the first solution, the UE and BS skip respectively-corresponding SPS-related processes and CG-related processes. According to exemplary implementations of the first solution, the skipped SPS-related processes can include one or more of:
- skipping to monitor downlink resources for receiving downlink data from the base station according to the one or more SPS downlink resource configurations, and
- skipping to transmit, to the base station, uplink control information regarding reception feedback for downlink data received according to the one or more SPS downlink resource configurations.

According to exemplary implementations of the first solution, the skipped CG-related processes can include one or more of:
- skipping to monitor a downlink control channel for downlink control information from the base station regarding reception feedback for uplink data transmitted by the UE using uplink resources according to the one or more configured uplink resource grants, and
- skipping to transmit uplink data to the base station using uplink resources according to the one or more configured uplink resource grants.

Correspondingly, the UE skips performing those processes for a particular period of time and thus can save power.

According to another exemplarily implementation, the processes to be skipped by the UE and BS in response to the configured-resources skipping indication may additionally include one or more of the processes related to the activation/deactivation of the SPS configurations and CGs, e.g.
- the UE skips monitoring the downlink control channel for downlink control information from the base station related to the deactivation of the SPS configurations or CGs, and
- the UE skips monitoring the downlink control channel for downlink control information from the base station related to the activation of the SPS configurations or CGs.

Correspondingly, the BS knows that the UE will not be monitoring the downlink control channel and thus also skips transmitting downlink control information to the UE via the downlink control channel for activating or deactivating SPS configurations or CGs.

Depending on the processes that are to be skipped by the UE and base station, it is possible to control the amount of power that can be saved by the improved power saving procedure

All the above skipping actions can be performed by the UE, thereby achieving a large power saving. However, in other implementations, not all the skipping actions need to be performed by the UE. Rather, one or some of the skipping actions can be performed by the UE, while then respectively performing the converse actions for the non-performed skipping actions. These converse actions are thus the following:
- continuing to monitor downlink resources for receiving downlink data from the base station according to one or more SPS downlink resource configurations,
- continuing to transmit uplink data to the base station using uplink resources according to one or more configured uplink resource grants,
- continuing to transmit, to the base station, uplink control information regarding reception feedback for downlink data received according to the one or more SPS downlink resource configurations,
- continuing to monitor a downlink control channel for downlink control information from the base station regarding reception feedback for uplink data transmitted by the UE using uplink resources according to the one or more configured uplink resource grants,
- continuing to monitor the downlink control channel for downlink control information from the base station related to the deactivation of the SPS configurations or CGs, and
- continuing to monitor the downlink control channel for downlink control information from the base station related to the activation of the SPS configurations or CGs.

In the above implementations of the first solution, it was described that the UE and base station skip performing particular processes for a skipping time period. According to further exemplary implementations, the UE and base station can determine when to begin said skipping action. There are several possibilities.

According to one possibility, the skipping action begins at the beginning of a time slot that is subsequent to the time slot during which the configured-resources skipping indication is received. For instance, it is assumed that the configured-resources skipping indication is received in a downlink control information, DCI, message via the downlink control channel (e.g. PDCCH) in the symbols of slot 0 of subframe 1. The UE and BS may begin the skipping action at the directly subsequent slot, e.g. slot 1 of the same subframe 1 (or slot 0 of the directly subsequent subframe, if subframe 1 has only slot 0).

According to another possibility, the skipping action is delayed, and the UE and BS begin the skipping action after the delay. According to one variant for SPS-related processes, the skipping delay may correspond to a number of N SPS downlink resource occasions provided by the respective SPS downlink resource configuration. As discussed before, the downlink resource occasions are periodic in time, and the skipping delay thus allows the base station these N SPS occasions to transmit data to the UE before skipping subsequent downlink resource occasions during the skipping time period.

According to another variant for CG-related processes, the skipping delay may correspond to a number of N configured uplink resource opportunities provided by the respective configured uplink resources grant. As discussed before, the uplink resource opportunities are periodic in time, and the skipping delay thus allows the UE to use these N uplink resource opportunities before skipping subsequent uplink resource opportunities during the skipping time period.

As before, the skipping action is performed for the skipping duration, starting after the skipping delay.

The skipping delay can be determined in different ways. For instance, the skipping delay can be fixed between the UE and base station, e.g. as defined by the operating system of the UE or base station (e.g. according to a 3GPP standard) or can be fixed by the network operator. According to another option, the skipping delay can be configured by the base station at the UE, e.g. via RRC. As still another option, the skipping delay can be dynamically instructed in the configured-resources skipping indication, e.g. by including a corresponding value or index for the skipping delay.

According to further exemplary implementations, the UE and base station can determine when to end said skipping action. In one exemplary implementation, the configured-resources skipping time period is in terms of time slots of a subframe. Thus, in one implementation the end of the skipping action depends on the beginning of the skipping action and it may be e.g. different to the end of the slot. In other options, specifically when the beginning of the skipping action is in the middle of a slot (e.g. see above solutions using a skipping delay), the skipping action can be stopped at the end of the slot in which the skipping duration ends.

As described above, the configured-resources skipping action is performed for a specific period of time. This skipping duration can be implemented in different ways. For instance, the skipping duration can be fixed between the UE and base station, e.g. as defined by the operating system of the UE or base station (e.g. according to a 3GPP standard) or can be fixed by the network operator. According to another option, the configured-resources skipping duration can be configured by the base station at the UE, e.g. via RRC. As still another option, the configured-resources skipping duration can be instructed dynamically in the configured-resources skipping indication, e.g. by including a corresponding value or index for the skipping duration.

According to further variants, the configured resources skipping duration can be the same for all SPS downlink resource configurations respectively configured uplink resource grants. According to other variants, the configured resources skipping duration can be different for different SPS downlink resource configurations and different for different configured uplink resource grants. In other words, the configured resource skipping duration is specific to the SPS configurations respectively CGs. As a result, the UE and base station, when determining the configured-resources skipping duration, also take into account specific SPS downlink resource configuration that is to be skipped respectively take also into account the specific CG that is to be skipped.

According to these variants, by making the skipping duration specific to the particular SPS/CG configuration, it is possible to more flexibly control the amount of power that can be saved. In one variant, the skipping duration can depend on the periodicity of the periodic resources. As an example, for an SPS configuration with periodic downlink resources having a longer periodicity, a longer SPS skipping duration can be defined so as to achieve a higher power saving. Conversely, for an SPS configuration with periodic downlink resources having a small periodicity, a shorter SPS skipping duration can be defined to achieve a sufficient power saving.

It is thus facilitated that the base station can achieve a suitable trade-off between the power saving gain and service latency, depending e.g. on the traffic arrival interval, service requirements and other traffic characteristics.

According to other different variants, rather than defining the configured resources skipping duration as being specific to the corresponding SPS/CG configuration, the configured resource skipping duration can be made specific to the reception-success feedback process which handles the reception-success feedback for the downlink data (SPS configuration) respectively uplink data (CG). In particular, typically a retransmission protocol is implemented between the UE and the base station to improve reliability of the data transmission, by allowing retransmissions of uplink/downlink data to be performed in case a previous data transmission was not successful. One example of such a retransmission protocol is Hybrid-automatic repeat request, HARQ. A retransmission protocol is typically structured based on separate processes with process IDs (for HARQ, called HARQ processes with separate HARQ process IDs), which handle the feedback and retransmission for separate data transmissions. Correspondingly, the retransmission protocol processes also handle the uplink data transmitted based on the periodic CG uplink resources and the downlink data transmitted based on the periodic SPS downlink resources. As a result, the UE and base station, when determining the configured-resources skipping duration, also take into account the retransmission protocol process which is known both at the UE and base station sides.

As an example, gNB may configure different skipping durations for different HARQ process IDs of SPS or CG. For some HARQ process IDs the skipping durations can be longer than that of others. In this way, gNB is able to control the skipping durations selectively depending on the traffic transmitted in different HARQ processes. For higher priority traffic with lower latency requirement, gNB can transmit using the SPS PDSCH with HARQ process with shorter skipping duration. Similarly in the UE side, UE can transmit higher priority traffic in CG PUSCH with HARQ process with shorter skipping duration.

In the above implementations of the first solution, it was described that the configured-resources skipping procedure skips one or more SPS configurations respectively one or more CGs. The following exemplary variants provide details on which specific SPS configurations respectively which specific CGs can be skipped.

The UE and base station may communicate based on one or more active SPS configurations respectively one or more active CGs. Then, in one exemplary implementation, the UE and base station skip all of the active SPS configurations respectively active CGs, thereby achieving a large power saving.

In other exemplarily implementations, the UE and base station skip some but not all of the active SPS configurations respectively active CGs. Correspondingly, the UE and base station need to determine which one or more SPS configurations respectively CGs are to be skipped, among all the possible SPS configurations respectively CGs.

Consequently, by skipping only some SPS configurations / CGs, it is possible to achieve a trade-off between saving power and maintaining a low service latency.

The control of which one or more SPS configurations respectively CGs are to be skipped may for instance rest with the base station. Correspondingly, the base station may provide suitable information in the configured-resources skipping indication for the UE. Informing the UE can be implemented in different ways.

For instance, the information included with the configured-resources skipping indication can be a bitmap. An SPS-related bitmap has sufficient bits so as to associate each bit with one possible SPS configuration that is to be skipped. Each bit can indicate whether the associated SPS configuration shall be skipped or not, e.g. the bit value zero indicating that the associated SPS configuration shall not be skipped, while the bit value one indicates that the associated SPS configuration shall be skipped.

Following the same principle as presented for the above SPS-related bitmap, another CG-related bitmap can be provided for identifying which configured uplink resource grants shall be skipped.

Using such bitmaps allows a very flexible instruction of which SPS/CG shall be skipped, but possibly requires a large number of bits so as to properly distinguish between all possible SPS configurations/CGs.

According to a further example, the information included with the configured-resources skipping indication can be a group index. The SPS-related group index identifies one or more among the possible SPS configurations that shall be skipped. In said respect, the UE and base station have an association that allows identifying from the received SPS-related group index the one or more associated SPS configurations. In one example, said SPS-related group index association can be configured at the UE by the base station, e.g. using a message of the RRC protocol. The configured resources skipping indication can include one or more SPS-related group indexes.

Following the same principles as presented with the above SPS-related group index, one or more CG-related group indexes can be provided for identifying which configured uplink resource grants shall be skipped. Again, the configured resources skipping indication can include one or more CG-related group indexes. Further, a CG-related group index association can be used by the UE and base station and can be configured at the UE by the base station, e.g. using a message of the RRC protocol.

Using such group indexes may reduce the flexibility of which SPS configurations or group of SPS configurations can be indicated to be skipped and may similarly reduce the flexibility of which CGs or group of CGs can be indicated to be skipped. However, using group indexes and corresponding associations may reduce the number of bits that are necessary to be transmitted between the base station and the UE for the improved power saving procedure.

In addition to the above bitmap-based variants and the group-index-based variants, in the following, a further variant is presented on how the base station can instruct the UE on which SPS configurations respectively CGs can be skipped. This additional variant is based on the use of a priority threshold. In said respect it is exemplarily assumed that each SPS configuration respectively CG has a priority, which can be compared to the mentioned priority threshold when determining which SPS configurations respectively CGs are to be skipped.

According to one example, the priority of all the SPS configurations can be compared against the priority threshold, and those SPS configurations having a priority equal to or lower than the priority threshold are identified as those that are to be skipped. Conversely, SPS configurations having a priority larger than the priority threshold are not to be skipped by the UE and base station.

In one exemplary variant, the priority threshold is determined by the base station, which thus can control the amount of power saving that is to be achieved. For instance, by setting a high priority threshold, more SPS configurations will be skipped, thereby increasing the power saving. By setting a lower priority threshold, less SPS configurations will be skipped, thereby achieving less power saving.

According to one example, the priority of all the CGs can be compared against the priority threshold, and those CG configurations having a priority equal to or lower than the priority threshold are identified as those that are to be skipped. Conversely, CGs having a priority larger than the priority threshold are not to be skipped by the UE and base station.

In one exemplary variant, the priority threshold is determined by the base station, which thus can control the amount of power saving that is to be achieved. For instance, by setting a high priority threshold, more CGs will be skipped, thereby increasing the power saving. By setting a lower priority threshold, less CGs will be skipped, thereby achieving less power saving.

The same or separate priority thresholds can be used for SPS and for CG.

Correspondingly, the determined priority threshold can be indicated by the base station in the configured-resources skipping indication, e.g. by setting a value for the priority threshold in a suitable field of the configured-resources skipping indication.

According to another exemplary variant rather than explicitly indicating the priority threshold in the configured-resources skipping indication, the priority threshold can be implicitly determined and signaled to the UE. For instance, when using the SPS/CG skipping procedure together with the control channel monitoring skipping procedure, the monitoring skipping time periods during which the downlink control channel monitoring can be skipped by the UE can be used to determine the priority threshold. For instance, a relationship or formula can be used to calculate the priority threshold from the monitoring skipping time period. In one example, the relationship is such that the longer the indicated monitoring skipping time period, the lower the priority threshold.

One difference between the first solution and the second solution described below is that in the first solution the configured-resources skipping indication is separate from a possible monitoring skipping indication that indicates that the UE is allowed to skip monitoring the downlink control channel. For instance, the first solution the configured-resources skipping indication can be transmitted by the base station in the same downlink control signal (DCI) as the monitoring skipping indication, but separately therefrom (e.g. in a separate DCI field). Alternatively, the configured-resources skipping indication can be transmitted separately, e.g. in a separate downlink control signal (DCI), such that the monitoring skipping indication is received via one DCI and the configured-resources skipping indication is received via another DCI.

Correspondingly, the improved power saving procedure according to which SPS-related processes and/or CG-related processes can be skipped by the UE and the base station, can be applied separately from another power saving procedure that is based on the monitoring skipping procedure (e.g. PDCCH skipping as explained above in 5G NR standards). To said end, it is necessary to define and transmit additional signaling related to the SPS / CG skipping procedure of the first solution.

On the other hand, as will be described in the below second solution, the configured-resources skipping indication is implemented to be the monitoring skipping indication, and vice versa.

### Second solution - enhanced PDCCH monitoring skipping procedure

As briefly mentioned in the above overview, an improved power saving procedure is presented herein, which enhances a control channel monitoring skipping procedure to also allow to instruct the UE to skip either one or both of processes related to SPS configurations and CGs. This second solution can be implemented separately and independently from the other solutions, such as the first, third, fourth and fifth solutions.

On the other hand, this second solution also implements an SPS / CG skipping procedure as explained already in connection with the first solution. However, rather than being a standalone SPS / CG skipping procedure as in the first solution, this second solution combines the SPS / CG skipping procedure (of the first solution) with a control channel monitoring skipping procedure (such as the PDCCH skipping, standardized for 3GPP 5G NR).

Consequently, many aspects of the second solution will be the same as presented in the first solution. In order to avoid repetition, those same aspects will not be explained in detail. Reference is rather made to the above description for the first solution.

Further, the following description focuses on the important aspects of this second solution, according to which it is possible to combine the mentioned SPS / CG skipping procedure (of the first solution) with the control channel monitoring skipping procedure.

In the following, a simplified and exemplary implementation of the control channel monitoring skipping procedure as currently used in the prior art will be presented. In brief, the base station may control when and for how long the UE is allowed to skip monitoring the downlink control channel for receiving downlink control information from the base station. To said end, the base station can transmit a monitoring skipping indication to the UE, indicating that the UE is allowed to skip monitoring a downlink control channel during a monitoring skipping time period. In one example, the monitoring skipping time period can be indicated within the monitoring skipping indication. The base station can determine the length of the monitoring skipping time period and include suitable information thereon in the monitoring skipping indication.

A more detailed exemplary implementation of such a control channel monitoring skipping procedure can be the same or similar to the PDCCH skipping procedure as defined in the 3GGP standards for 5G NR. A brief explanation of such a 3GPP 5G NR PDCCH skipping procedure was presented above. In accordance therewith, the PDCCH monitoring occasions are skipped by the UE.

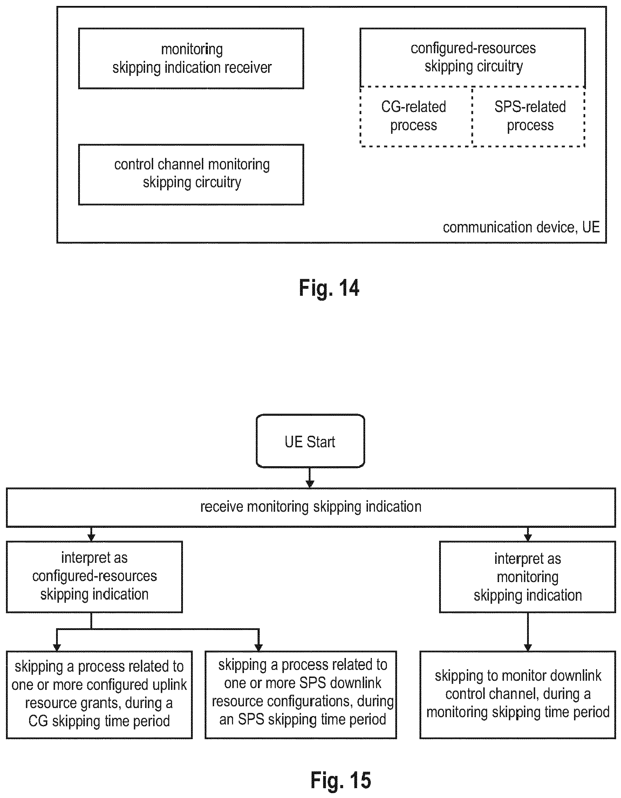

**Fig. 14** illustrates a simplified and exemplary UE structure according to an exemplary implementation of the improved power saving procedure of the second solution, which can be implemented based on the general UE structure explained in connection with Fig. 8. The various structural elements of the UE illustrated in said Fig. 14 can be interconnected between one another e.g. with corresponding input/output nodes (not shown) e.g. in order to exchange control and user data and other signals. Although not shown for illustration purposes, the UE may include further structural elements.

As apparent from Fig. 14, the UE may include a monitoring skipping indication receiver, a configured-resources skipping circuitry and a control channel monitoring skipping circuitry. According to this second solution, the configured-resources skipping circuitry can participate in the actions of skipping one or more of CG-related processes and SPS-related processes. Furthermore, the control channel monitoring skipping circuitry can participate in the action of skipping to monitor the downlink control channel.

In the present case as will become apparent from the below disclosure, the receiver of the UE can thus be exemplarily configured to at least partly perform one or more of receiving the monitoring skipping indication, receiving downlink data, receiving downlink control information, receiving associations and configuration messages from the base station, etc.

In the present case as will become apparent from the below disclosure, the processing circuitry of the UE can thus be exemplarily configured to at least partly perform one or more of skipping a process during a time period, determining when to begin the skipping action, determining the configured-resources skipping time period, determining the SPS downlink resource configurations to be skipped, determining the configured uplink resource grants to be skipped, skipping monitoring the downlink control channel, properly interpreting the received monitoring skipping indication, etc.

In the present case as will become apparent from the below disclosure, the transmitter of the UE can thus be exemplarily configured to at least partly perform one or more of transmitting uplink data to the base station, transmitting uplink control information regarding reception feedback, etc.

One exemplary procedure as will be disclosed in more detail further below is implemented by a UE that includes the following. A receiver receives a monitoring skipping indication in a downlink control signal from the base station. A processing circuitry of the UE interprets the received monitoring skipping indication as a configured-resources skipping indication and as a monitoring skipping indication.

The monitoring skipping indication indicates that the UE is allowed to skip monitoring a downlink control channel during a monitoring skipping time period, and the processing circuitry in response to the monitoring skipping indication, skips monitoring the downlink control channel for downlink control information from the base station during the monitoring skipping time period.

The monitoring skipping indication interpreted as the configured-resources skipping indication indicates that the UE is allowed to perform one or more of the following actions:
- skipping a process related to one or more configured uplink resource grants, and
- skipping a process related to one or more semi-persistent, SPS, downlink resource configurations.

The processing circuitry, in response to the interpreted configured-resources skipping indication, skips the one or more processes during a configured-resources skipping time period.

The second solution also provides a corresponding method to be performed by the UE. A sequence diagram for an exemplary UE behaviour in line with the above discussed UE and UE method is illustrated in **Fig. 15****.** As apparent therefrom, the UE receives only one indication, here exemplarily titled the monitoring skipping indication, which it however interprets as both the monitoring skipping indication and as the configured-resources skipping indication. In response to the received indication, the UE then behaves in accordance with the two interpretations. In more detail, in response to the interpreted monitoring skipping indication, the UE skips, during a monitoring skipping time period, monitoring the downlink control channel for downlink control information from the base station. Moreover, in response to the interpreted configured-resources skipping indication, the UE skips, during respective skipping time periods, CG-related processes and SPS-related processes.

In Fig. 15, it is exemplarily assumed that both a CG-related UE process and an SPS-related UE process are skipped; however, it is also possible that only one of a CG-related UE process and an SPS-related UE process is to be skipped.

Although not illustrated in Fig. 15, the UE may resume the skipped UE processes after the skipping time period and may also resume the monitoring of the downlink control channel after the monitoring skipping time period.

The above-described improved power saving procedure thus achieves the object and overcomes at least some of the drawbacks explained above. In particular, the UE is able to save power, because the UE does not perform certain UE processes. Furthermore, by combining the two power saving procedures, even more power can be saved at the UE. In addition, only one indication is transmitted by the base station to the UE to trigger both power saving procedures, such that the signaling overhead can be reduced.

Some exemplary implementations of the improved power saving procedure of this second solution also involve the base station, to which the UE is currently connected (termed e.g. serving base station because the base station serves the UE). Correspondingly, the improved power saving procedure also provides an improved base station that participates therein.

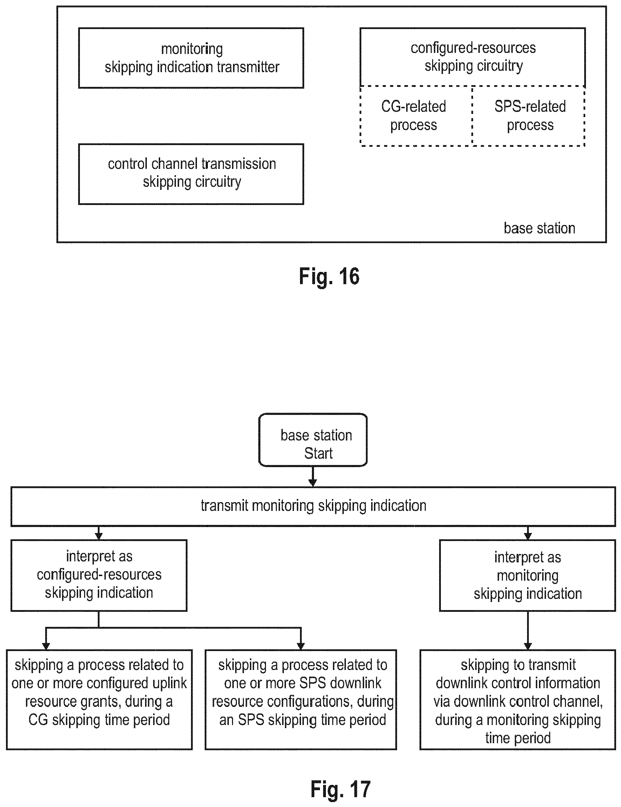

**Fig. 16** illustrates a simplified and exemplary base station structure according to an exemplary implementation of the improved power saving procedure, which can be implemented based on the general base station structure explained in connection with Fig. 8. The various structural elements of the base station illustrated in said Fig. 16 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a monitoring skipping indication transmitter, a configured-resources skipping circuitry, and a control channel transmission skipping circuitry. According to this second solution, the configured-resources skipping circuitry can participate in the actions of skipping one or more CG-related processes and SPS-related process at the base station. Furthermore, the control channel transmission skipping circuitry can participate in the action of skipping to transmit on the downlink control channel.

In the present case as will become apparent from the below disclosure, the receiver of the base station can thus be exemplarily configured to at least partly perform one or more of receiving, from the UE, uplink data and uplink control information regarding reception feedback etc.

In the present case as will become apparent from the below disclosure, the processing circuitry of the base station can thus be exemplarily configured to at least partly perform one or more of skipping BS-processes that correspond to UE-processes to be skipped by the UE, continuing to perform BS-processes, determining SPS-downlink resource configurations to be skipped, determining the configured uplink resource grants to be skipped, determining a monitoring skipping time period, etc.

In the present case as will become apparent from the below disclosure, the transmitter of the base station can thus be exemplarily configured to at least partly perform one or more of transmitting the monitoring skipping indication, transmitting downlink data, transmitting downlink control information, transmitting associations and configuration messages to the UE, etc.

One exemplary procedure as will be disclosed in more detail further below is implemented by a base station that includes the following. A transmitter transmits to a user equipment, UE, a monitoring skipping indication in a downlink control signal to the UE. A processing circuitry interprets the monitoring skipping indication as a configured-resources skipping indication and as a monitoring skipping indication.

The monitoring skipping indication indicates that the UE is allowed to skip monitoring a downlink control channel during a monitoring skipping time period, and the processing circuitry in response to the monitoring skipping indication, skips transmitting downlink control information via the downlink control channel to the UE during the monitoring skipping time period.

The monitoring skipping indication interpreted as the configured-resources skipping indication indicates that the UE is allowed to perform one or more of the following actions:
- skipping a process related to one or more configured uplink resource grants, and
- skipping a process related to one or more semi-persistent, SPS, downlink resource configurations.

The processing circuitry, in response to the interpreted configured-resources skipping indication, skips, during a configured-resources skipping time period, base-station processes that correspond to the one or more processes skipped at the UE side.

The second solution also provides a corresponding method to be performed by the base station. A corresponding sequence diagram for an exemplary base station behavior in line with the above-discussed base station and corresponding method is illustrated in **Fig.** 17. The sequence diagram illustrates an exemplary and simplified implementation of the above presented base station method.

Similarly to Fig. 15, in Fig. 17 it is exemplarily assumed that the configured-resource skipping indication results in the BS skipping both a CG-related BS process and an SPS-related BS process. However, it is also possible that the configured-resource skipping indication results in the BS skipping only one of a CG-related BS process and an SPS-related BS process.

In the following, more specific implementations and variants of the above discussed operations of the second solution will be described. The description will be presented mainly from the UE side, but a corresponding description can be applied to the base station side. Different solutions are presented for allowing energy saving at the UE side.

For the second solution, similar assumptions can be made as for the first solution, including the configuration of SPS resources based on one or more SPS downlink resource configurations, such as the RRC IE *SPS-Config.* Thus, downlink data can be transmitted by the base station to the UE using the active SPS configuration(s). Again, this involves that the UE performs SPS-related UE processes, and that the BS performs SPS-related BS processes. The details are provided already for the first solution.

In addition or alternatively, it is exemplarily assumed that the UE is configured with CG uplink resources based on corresponding CGs, as assumed for the first solution. Thus, the UE can use the periodic uplink resources provided by one or more active CGs to transmit uplink data to the base station. Again, this involves that the UE performs CG-related UE processes, and that the BS performs CG-related BS processes. The details are provided already for the first solution.

As already hinted at above, the second solution revolves around the idea of combining the configured-resources skipping indication as described above in the first solution with the monitoring skipping indication (one simplified broad example being described above, and another detailed example being defined by the 3GPP standards). The thus combined indication is called exemplarily in the following "combined skipping indication".

By reusing the monitoring skipping indication already available from the prior art, it is possible to reuse existing procedures and thus to mitigate having to agree on new definitions and procedures in 3GPP in said respect. For instance, the DCI Formats 0_1, 0_2, 1_1 and 1_2 are already defined to carry the PDCCH monitoring adaption field as the monitoring skipping indication, for indicating a value from among different skipping duration value(s) defined by RRC, particularly by the RRC Information Element *PDCCHSkippingDurationList.*

In accordance with the second solution, the monitoring skipping indication field is not only used to indicate whether skipping of the downlink control channel is to be performed, but also to indicate whether skipping of SPS and/or CG is to be performed.

According to particular exemplary implementations of this second solution, one or more of the following additional actions can be performed by the UE in response to the combined skipping indication.

The UE can skip monitoring the downlink control channel in the usual manner, e.g. by skipping to monitor the monitoring occasions of the downlink control channel, however with one or more of the following exceptions:
- continuing, during the monitoring skipping time period, to monitor the downlink control channel for downlink control information from the base station related to the one or more configured uplink resource grants, and
- continuing, during the monitoring skipping time period, to monitor the downlink control channel for downlink control information from the base station related to the one or more SPS downlink resource configurations.

In a more detailed and exemplary implementation, the exceptional actions are one or more of the following actions:
- continuing, during the monitoring skipping time period, to monitor the downlink control channel for downlink control information from the base station related to reception feedback for uplink data transmitted by the UE using uplink resources according to the one or more configured uplink resource grants,
- continuing, during the monitoring skipping time period, to monitor the downlink control channel for downlink control information from the base station related to a deactivation of the one or more configured uplink resource grants or of the one or more SPS downlink resource configurations,
- continuing, during the monitoring skipping time period, to monitor the downlink control channel for downlink control information from the base station related to an activation of the one or more configured uplink resource grants or of the one or more SPS downlink resource configurations.

Alternatively, rather than exceptionally continuing to monitor the downlink control channel for downlink control information regarding the reception feedback for uplink data transmitted using CG uplink resources, the UE may skip to monitor same, because reception feedback seems not necessary considering that the UE also skips the transmission of uplink data using CG uplink resources in response to the combined skipping indication (see below).

According to other exemplary and detailed implementations, the above described continuing action may be performed to continue monitoring the corresponding downlink control channel monitoring occasions (PDCCH monitoring occasions) with CS-RNTI(s) for the retransmission/implicit NACK of an active CG in Type3 PDCCH CSS and USS or any other search spaces.

According to other exemplary and detailed implementations, the above described continuing action may be performed to continue monitoring the monitoring occasions (PDCCH monitoring occasions) with CS-RNTI(s) for the potential deactivation of a currently active SPS configurations or CGs in Type3 PDCCH CSS and USS or any other search spaces

According to other exemplary and detailed implementations, the above described continuing action may be performed to continue monitoring the monitoring occasions (PDCCH monitoring occasions) with CS-RNTI(s) for the potential activation of a currently active SPS configurations or CGs in Type3 PDCCH CSS and USS or any other search spaces.

Therefore, the SPS/CG-related operation can be free of impact by the PDCCH skipping, and the service continuity can be facilitated, while compromising a small amount of power saving.

In addition to the above described exceptional actions to be performed in response to the combined skipping indication, the UE performs one or more of the following actions related to the SPS / CG skipping:
- skipping a process related to one or more configured uplink resource grants, and
- skipping a process related to one or more semi-persistent, SPS, downlink resource configurations,

In more detailed and exemplarily implementations, these skipping actions can be one or more of:
- skipping to monitor downlink resources for receiving downlink data from the base station according to the one or more SPS downlink resource configurations,
- skipping to monitor a downlink control channel for downlink control information from the base station regarding reception feedback for uplink data transmitted by the UE using uplink resources according to the one or more configured uplink resource grants (see above-mentioned alternative),
- skipping to transmit uplink data to the base station using uplink resources according to the one or more configured uplink resource grants, and
- skipping to transmit, to the base station, uplink control information regarding reception feedback for downlink data received according to the one or more SPS downlink resource configurations

All the above skipping and continuing actions can be performed by the UE. However, in other implementations, not all these actions need to be performed by the UE. Rather, one or some of these actions can be performed by the UE, while then respectively performing the converse actions for the non-performed actions. These converse actions are thus the following:
- continuing to monitor downlink resources for receiving downlink data from the base station according to one or more SPS downlink resource configurations,
- continuing to transmit uplink data to the base station using uplink resources according to one or more configured uplink resource grants,
- continuing to transmit, to the base station, uplink control information regarding reception feedback for downlink data received according to the one or more SPS downlink resource configurations,
- continuing to monitor a downlink control channel for downlink control information from the base station regarding reception feedback for uplink data transmitted by the UE using uplink resources according to the one or more configured uplink resource grants,
- skipping to monitor the downlink control channel for downlink control information from the base station related to the deactivation of the SPS configurations or CGs, and
- skipping to monitor the downlink control channel for downlink control information from the base station related to the activation of the SPS configurations or CGs.

As discussed above, the second solution is based on using the monitoring skipping indication to also indicate the configured-resources skipping action. For instance, when the monitoring skipping indication indicates to skip monitoring the downlink control channel, then this is also interpreting as indicating to skip SPS or CG-related process(es).

According to one exemplary implementation of this second solution, the skipping behaviour (e.g. which one or more SPS-related processes are to skipped and/or which one or more CG-related processes are to be skipped and/or which downlink control channel monitoring processes are to be skipped) can be configured between the UE and the base station in advance. Thus, at the point of time when receiving the combined skipping indication, the UE knows which processes are to be skipped and which processes are to be continued.

This advance configuration can be defined as a default.

In addition or alternatively, this advance configuration can be determined by the base station, which then can configure the UE accordingly, e.g. based on a configuration using the RRC protocol.

In the above implementations of the second solution, it was described that the UE and base station skip performing particular processes. According to further exemplary implementations, the UE and base station can determine when to begin said skipping actions. There are several possibilities, which have been already described in detail in the first solution.

In summary, according to one possibility, the skipping action begins at the beginning of a time slot that is subsequent to the time slot during which the combined skipping indication is received, as explained in detail for the first solution. According to another possibility, the skipping action is delayed, and the UE and BS begin the skipping action after the delay. The details are provided already for the first solution

As described above, the configured-resources skipping actions and the downlink control channel monitoring skipping actions are performed for a specific period of time. This can be implemented in different ways.

In one exemplary implementation, the duration indicated by the monitoring skipping indication (e.g. one of the *PDCCHSkippingDurationList*) is used as the monitoring skipping duration and the configured-resources skipping duration; they are equally long. This allows the two power saving mechanisms to be synchronized and reuses existing fields and definitions from the monitoring skipping procedure.

In another exemplary implementation, the monitoring skipping duration and the configured-resources skipping duration can be different from one another. For instance, the monitoring skipping duration is still explicitly indicated by the monitoring skipping indication, but the configured-resources skipping duration is determined differently by the UE. Several variants for defining the configured-resources skipping duration have already been presented above for the first solution and can be also applied to the second solution. In brief, the configured-resources skipping duration can be fixed between the UE and base station, or can be configured by the base station at the UE in advance, or can be directly indicated by another field of the combined skipping indication.

Moreover and in a corresponding manner as described already for the first solution, the configured-resources skipping duration can be the same for all SPS configuration and the same for all CGs. Otherwise, the configured-resource skipping duration for SPS configurations can also be different for different SPS configurations, and the configured-resources skipping duration for CGs can also be different for different CGs.

In still other variants, the configured-resources skipping duration is not specific to the respective SPS / CG configurations, but rather specific to the retransmission protocol process, as explained in detail in the above first solution.

According to further exemplary implementations, the UE and base station can determine when to end said skipping actions, which can be the same as already explained in the above first solution.

Further exemplary implementations of the second solution relate to details on which specific SPS configurations respectively which specific CGs can be skipped. Corresponding implementations have been already described in detail in accordance with the first solution and can be equally applied to this second solution. In brief, the UE and base station can skip all of the active SPS configurations respectively active CGs, so as to achieve a large power gain.

On the other hand, the UE and base station can skip some, but not all, of the active SPS configurations respectively active CGs. This involves a prior determination of which SPS configurations respectively CGs are to be skipped at the UE and base station. This prior determination for instance can rest with the base station, which is also responsible for then informing the UE.

Informing the UE by the base station can be achieved according to several different implementations. As explained already in detail for the first solution, the UE may be informed based on bitmaps or based on one or more group indexes or based on the use of priority thresholds. The details for the bitmap, group index, priority threshold solutions presented for the first solution can be equally applied to the second solution and are thus not repeated.

### Third solution - SPS / CG activation and deactivation procedure

As briefly mentioned in the above overview, an improved power saving procedure is presented herein, which allows to instruct the UE to activate or deactivate either one or both of several SPS configurations and several CGs. For this third solution, similar assumptions can be made as for the first and second solutions, particularly including the configuration of SPS resources based on one or more SPS downlink resource configurations, such as the RRC IE *SPS-Config.* Thus, downlink data can be transmitted by the base station to the UE using the active SPS configuration(s). The details are provided already for the first solution.

In addition or alternatively, it is exemplarily assumed that the UE is configured with CG uplink resources based on corresponding one or more CGs, as assumed for the first solution. Thus, the UE can use the periodic uplink resources provided by one or more active CGs to transmit uplink data to the base station. The details are provided already for the first solution.

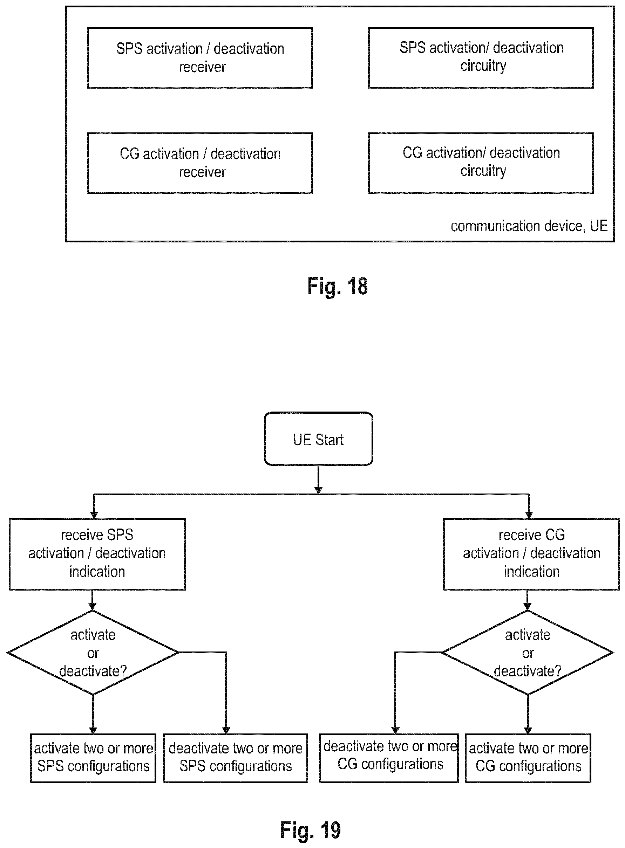

**Fig. 18** illustrates a simplified and exemplary UE structure according to an exemplary implementation of the improved power saving procedure of the third solution, which can be implemented based on the general UE structure explained in connection with Fig. 8. The various structural elements of the UE illustrated in said Fig. 18 can be interconnected between one another e.g. with corresponding input/output nodes (not shown) e.g. in order to exchange control and user data and other signals. Although not shown for illustration purposes, the UE may include further structural elements.

As apparent from Fig. 18, the UE may include an SPS activation / deactivation receiver, an SPS activation / deactivation circuitry, a CG activation / deactivation receiver, and a CG activation / deactivation circuitry.

In the present case as will become apparent from the below disclosure, the receiver of the UE can thus be exemplarily configured to at least partly perform one or more of receiving an SPS activation indication, an SPS deactivation indication, a CG activation indication, and a CG deactivation indication, from the base station, etc.

In the present case as will become apparent from the below disclosure, the processing circuitry of the UE can thus be exemplarily configured to at least partly perform one or more of activating SPS configurations, deactivating SPS configurations, activating CGs, deactivating CGs, etc.

In the present case as will become apparent from the below disclosure, the transmitter of the UE can thus be exemplarily configured to at least partly perform one or more of transmitting uplink data to the base station, transmitting uplink control information regarding reception feedback, etc.

One exemplary procedure as will be disclosed in more detail further below is implemented by a UE that includes the following. A receiver receives an SPS activation/deactivation indication from the base station, and a processing circuitry of the UE determines two or more SPS downlink resource configurations among the plurality of SPS downlink resource configurations to be activated/deactivated based on information included in the received SPS activation/deactivation indication. The processing circuitry activates/deactivates the two or more SPS downlink resource configurations based on the received SPS activation/deactivation indication.

In addition or alternatively, the receiver receives a CG activation/deactivation indication from the base station, and the processing circuitry determines two or more configured uplink resource grants among the plurality of configured uplink resource grants to be activated/deactivated based on information included in the received CG activation/deactivation indication. The processing circuitry activates/deactivates the two or more configured uplink resource grants based on the received CG activation/deactivation indication

The third solution also provides a corresponding method to be performed by the UE. A sequence diagram for an exemplary UE behaviour in line with the above discussed UE and UE method is illustrated in Fig. 19. Both Fig. 18 and 19 exemplarily illustrate a UE behaviour which can handle both SPS-related activation/deactivation and CG-related activation/deactivation. However, it is equally possible according to the third solution that the UE is such that it operates to handle only one of SPS-related activation/deactivation and CG-related activation/deactivation.

The improved power saving procedure of the third solution allows to activate or deactivate several SPS configurations and/or to activate or deactivate several CGs. Therefore, by providing a procedure to activate/deactivate several configured-resources configurations (be it SPS or CG or both), power saving gain can be achieved by adapting to traffic using less control overhead.

Some exemplary implementations of the improved power saving procedure also involve the base station, to which the UE is currently connected (termed e.g. serving base station because the base station serves the UE). Correspondingly, the improved power saving procedure also provides an improved base station that participates therein, e.g. with a behaviour that corresponds to the above explained UE behaviour.

In the following, more specific implementations and variants of the above discussed operations of the third solution will be described. The description will be presented mainly from the UE side, but a corresponding description can also be applied for the base station side. Different solutions are presented for allowing energy saving at the UE side.

In some exemplary implementations of the third solution, the SPS activation/deactivation indication can be transmitted by the base station in a suitable downlink control signal, such as a DCI. For instance, a DCI with a CRC scrambled by CS-RNTI (Configured Scheduling RNTI) can be used, or alternatively a DCI regarding a dynamic UL or DL scheduling.

According to one possible variant, the SPS activation/deactivation indication can be transmitted together with the configured-resources skipping indication of the first solution, or together with the combined skipping indication of the second solution.

Similarly, in some exemplary implementations of the third solution, the CG activation/deactivation indication can be transmitted by the base station in a suitable downlink control signal, such as a DCI. For instance, a DCI with a CRC scrambled by CS-RNTI (Configured Scheduling RNTI) can be used, or alternatively a DCI regarding a dynamic UL or DL scheduling.

According to one possible variant, the CG activation/deactivation indication can be transmitted together with the configured-resources skipping indication of the first solution, or together with the combined skipping indication of the second solution.

The following exemplary variants provide details on how the SPS or CG activation/deactivation indications can indicate which two or more SPS configurations respectively two or more CGs shall be activated/deactivated.

According to one exemplary variant, suitable information is included in the activation/deactivation indication and can be a bitmap.

With regard to the SPS activation/deactivation, each bit of the SPS-related bitmap is associated with one of the plurality of SPS downlink resource configurations and indicates whether or not the associated SPS downlink resource configuration is to be activated/deactivated. The SPS-related bitmap may have sufficient bits so as to associate each bit with one possible SPS configuration that is to be activated/deactivated. For instance, the bit value zero indicates that the associated SPS configuration shall be deactivated, while the bit value one indicates that the associated SPS configuration shall be activated.

With regard to the CG activation/deactivation, each bit of the CG-related bitmap is associated with one of the plurality of configured uplink resource grants and indicates whether or not the associated configured uplink resource grant is to be activated/deactivated. The CG-related bitmap may have sufficient bits so as to associate each bit with one possible CG that is to be activated/deactivated. For instance, the bit value zero indicates that the associated CG shall be deactivated, while the bit value one indicates that the associated CG shall be activated.

Using such a bitmap allows a very flexible instruction of which SPS/CG shall be activated or deactivated, but possibly requires a large number of bits so as to properly distinguish between all possible SPS configurations/CGs.

According to another exemplary variant, the suitable information in the activation/deactivation indication is provided as one or more group indexes.

With regard to the SPS activation/deactivation, each SPS group index can indicate one or more SPS configurations. The UE and base station have an association that allows to identify, from the received SPS group index, the one or more associated SPS configurations. The UE then determines the two or more SPS configurations based on said association and the received one or more SPS group indexes. In one example, said SPS group index association can be configured at the UE by the base station, e.g. using a message of the RRC protocol.

With regard to the CG activation/deactivation, each CG group index can indicate one or more CGs. The UE then determines the two or more CGs based on an association between each CG group index and configured uplink resource grants. The UE and base station have an association that allows to identify, from the received CG group index, the one or more associated CGs. The UE then determines the two or more CGs based on said association and the received one or more CG group indexes. In one example, said group index association can be configured at the UE by the base station, e.g. using a message of the RRC protocol.

Using such a group index may reduce the flexibility of which SPS configurations or group of SPS configurations can be indicated to be activated/deactivated, and similarly reduces the flexibility of which CGs or group of CGs can be indicated to be activated/deactivated. However, using group indexes and corresponding associations may reduce the number of bits that are necessary to be transmitted between the base station and the UE for the improved power saving procedure of the third solution.

In addition to the above bitmap-based variants and group-index-based variants, in the following, a further variant is presented on how the base station can instruct the UE on which SPS configurations respectively CGs can be activated/deactivated. This additional variant is based on the use of a priority threshold. In said respect it is exemplarily assumed that each SPS configuration respectively CG has a priority, which can be compared to the mentioned priority threshold when determining which SPS configurations respectively CGs are to be activated/deactivated.

According to one example, the priority of the SPS configurations can be compared against the priority threshold, and those SPS configurations having a priority equal to or lower than the priority threshold are identified as those that are to be deactivated. Conversely, SPS configurations having a priority larger than the priority threshold are to be activated.

Accordingly, only low-priority SPS configuration are to be deactivated, while high-priority SPS configurations are to be activated. This may have the advantage that power can be saved, while facilitating that high-priority data can still be exchanged in downlink based on high-priority SPS configurations between the base station and the UE.

In one exemplary variant, the priority threshold is determined by the base station, which thus can control the amount of power saving that is to be achieved. For instance, by setting a high priority threshold, more SPS configurations will be deactivated and a few SPS configurations are to be activated, thereby increasing the power saving. By setting a lower priority threshold, less SPS configurations will be deactivated and more SPS configurations will be activated, thereby achieving less power saving.

According to one example, the priority of the CGs can be compared against the priority threshold, and those CGs having a priority equal to or lower than the priority threshold are identified as those that are to be deactivated. Conversely, CGs having a priority larger than the priority threshold are to be activated.

Accordingly, only low-priority CGs are to be deactivated, while high-priority CGs configurations are to be activated. This may have the advantage that power can be saved, while facilitating that high-priority data can still be exchanged in uplink based on high-priority CGs between the base station and the UE.

In one exemplary variant, the priority threshold is determined by the base station, which thus can control the amount of power saving that is to be achieved. For instance, by setting a high priority threshold, more CGs will be deactivated and a few CGs are to be activated, thereby increasing the power saving. By setting a lower priority threshold, less CGs will be deactivated and more CGs will be activated, thereby achieving less power saving.

Separate priority thresholds can be used for SPS and for CG.

Correspondingly, the determined priority threshold can be indicated by the base station in the SPS activation/deactivation indication respectively in the CG activation/deactivation indication, e.g. by setting a value for the priority threshold in a suitable field.

### Fourth solution - SPS / CG switching procedure

As briefly mentioned in the above overview, an improved power saving procedure is presented herein, which allows to instruct the UE to switch either one or both of the currently-used SPS configuration(s) and CG(s).

For this fourth solution, similar assumptions can be made as for the first, second and third solutions, particularly including the configuration of SPS resources based on one or more SPS downlink resource configurations, such as the RRC IE *SPS-Config.* Thus, downlink data can be transmitted by the base station to the UE using the active SPS configuration(s).

In addition or alternatively, it is exemplarily assumed that the UE is configured with CG uplink resources based on corresponding one or more CGs, as assumed for the first solution. Thus, the UE can use the periodic uplink resources provided by one or more active CGs to transmit uplink data to the base station.

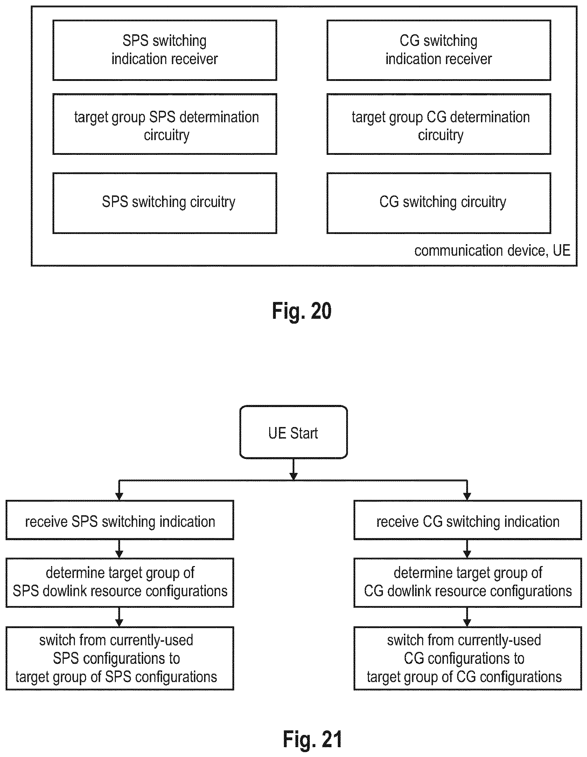

Fig. 20 illustrates a simplified and exemplary UE structure according to an exemplary implementation of the improved power saving procedure of the fourth solution, which can be implemented based on the general UE structure explained in connection with Fig. 8. The various structural elements of the UE illustrated in said Fig. 20 can be interconnected between one another e.g. with corresponding input/output nodes (not shown) e.g. in order to exchange control and user data and other signals. Although not shown for illustration purposes, the UE may include further structural elements.

As apparent from Fig. 20, the UE may include an SPS switching indication receiver, a target group SPS determination circuitry, an SPS switching circuitry, a CG switching indication receiver, a target group CG determination circuitry, and a CG switching circuitry.

In the present case as will become apparent from the below disclosure, the receiver of the UE can thus be exemplarily configured to at least partly perform one or more of receiving an SPS switching indication and a CG switching indication from the base station, receiving downlink data, etc.

In the present case as will become apparent from the below disclosure, the processing circuitry of the UE can thus be exemplarily configured to at least partly perform one or more of determining a target group of SPS configurations and a target group of CGs, switching between SPS configurations, switching between CGs, etc.

In the present case as will become apparent from the below disclosure, the transmitter of the UE can thus be exemplarily configured to at least partly perform one or more of transmitting uplink data to the base station, transmitting uplink control information regarding reception feedback, etc.

One exemplary procedure as will be disclosed in more detail further below is implemented by a UE that includes the following. A UE is configured with a plurality of SPS downlink resource configurations. The receiver receives an SPS switch indication, including an SPS group index, from the base station. A processing circuitry of the UE determines a target group of SPS downlink resource configuration based on the SPS group index in the received SPS switch indication. The processing circuitry switches from a currently-used group of SPS downlink resource configurations to the determined target group of SPS downlink resource configurations. In one exemplary option, the determination of the target group of SPS downlink resource configuration can be further based on an association between each SPS group index and one or more SPS downlink resource configurations.

In addition or alternatively, the UE is configured with a plurality of CGs. The receiver of the UE receives a CG switch indication, including a CG group index, from the base station. The processing circuitry determines a target group of configured uplink resource grants based on the CG group index in the received CG switch indication. The processing circuitry switches from a currently-used group of configured uplink resource grants to the determined group of target configured uplink resource grants. In one exemplary option, the determination of the target group of configured uplink resource grants is further based on an association between each CG group index and one or more configured uplink resource grants.

The fourth solution also provides a corresponding method to be performed by the UE. A sequence diagram for an exemplary UE behaviour in line with the above discussed UE and UE method is illustrated in **Fig. 21****.** Both Fig. 20 and 21 exemplarily illustrate a UE behaviour which can handle both group SPS switching and group CG switching. However, it is equally possible according to the fourth solution that the UE is such that it operates to handle only one of group SPS switching and group CG switching.

The improved power saving procedure of the fourth solution allows to easily switch to a target group of SPS configurations respectively CGs. By providing a procedure for switching to a target group of SPS configurations respectively CGs, power saving gain can be achieved by adapting to traffic using less control overhead.

Some exemplary implementations of the improved power saving procedure also involve the base station, to which the UE is currently connected (termed e.g. serving base station because the base station serves the UE). Correspondingly, the improved power saving procedure of the fourth solution also provides an improved base station that participates therein, e.g. with a behaviour that corresponds to the above explained UE behaviour.

In the following, more specific implementations and variants of the above discussed operations of the fourth solution will be described. The description will be presented mainly from the UE side, but a corresponding description can be applied to the base station side. Different solutions are presented for allowing energy saving at the UE side.

In some exemplary implementations of the fourth solution, the SPS switching indication can be transmitted by the base station in a suitable downlink control signal, such as a DCI. For instance, a DCI with a CRC scrambled by CS-RNTI (Configured Scheduling RNTI) can be used, or alternatively a DCI regarding a dynamic UL or DL scheduling.

According to one possible variant, the SPS switching indication can be transmitted together with the configured-resources skipping indication of the first solution, or together with the combined skipping indication of the second solution. In addition, the SPS switching indication can be transmitted together with the SPS or CG activation/deactivation indication of the third solution.

Similarly, the CG switching indication can be transmitted together with the configured-resources skipping indication of the first solution, or together with the combined skipping indication of the second solution. In addition, the CG switching indication can be transmitted together with the SPS or CG activation/deactivation indication of the third solution.

The following exemplary variants provide details on how the SPS or CG switching indication can indicate the target group of SPS configurations respectively CGs. According to one exemplary variant, one or more group indexes are included in the SPS / CG switching indication.

With regard to the SPS switching, each SPS group index can indicate one or more SPS configurations. The UE and base station have an association that allows to identify, from the received SPS group index, the one or more associated SPS configurations. The UE then determines the target group of SPS configurations based on said association and the received one or more SPS group indexes. In one example, said SPS group index association can be configured at the UE by the base station, e.g. using a message of the RRC protocol.

With regard to the CG switching, each CG group index can indicate one or more CGs. The UE and base station have an association that allows to identify, from the received CG group index, the one or more associated CGs. The UE then determines the target group of CGs based on said association and the received one or more CG group indexes. In one example, said CG group index association can be configured at the UE by the base station, e.g. using a message of the RRC protocol.

The following timer-based SPS / CG switching mechanisms are provided in addition or alternatively to the above discussed group-index-based mechanisms to switch between different groups of SPS configurations based on transmitting a group index to the UE.

More specifically for SPS switching, the UE operates an SPS switching counter (can also be called SPS switching timer). The SPS switching counter is started when a group of SPS downlink resource configurations is activated. In case the SPS switching counter reaches an SPS switching counter threshold, the UE switches from the currently-activated group of SPS downlink resource configurations to another target group of SPS downlink resource configurations. For instance, the target group of SPS configuration can be defined in advance at the UE, e.g. being a default SPS configuration group or being configured by the base station at the UE.

The target SPS configuration group can be e.g. the SPS configuration group with group index = 0. In one exemplary option, the target SPS configuration group has only a few SPS resources, such that the UE can save power.

There are several possibilities on how the SPS switching counter is operated.

In one possibility, the SPS switching counter counts the number of consecutive time slots that the currently-activated SPS configuration group is already activated but in which the UE does not receive downlink data from the base station according to said activated SPS configuration group. In one variant, the SPS switching counter can count down from an initial value of the SPS switching counter, and the SPS switching counter triggers the group SPS switching when it reaches the threshold = 0. In another variant, the SPS switching counter can count up from e.g. 0, and when reaching a threshold, the group SPS switching is triggered. The SPS switching counter is reset when the UE receives downlink data in one time slot from the base station according to said activated SPS configuration group.

In another possibility, rather than counting the number of consecutive time slots, the number of consecutive SPS downlink resource opportunities are counted for the SPS switching counter. In particular, the SPS switching counter counts the number of consecutive SPS downlink resource opportunities, provided by the activated group of SPS downlink resource configurations, for which the UE does not receive downlink data from the base station according to the activated SPS configuration group. As explained in the variants for the previous possibility, the SPS switching counter can count down or up. The SPS switching counter is reset when the UE receives downlink data from the base station in one SPS downlink resource opportunity, provided by said activated SPS configuration group.

For instance, there might be no downlink data to be transmitted by the base station, and the SPS resources might not be needed. By switching to another target SPS configuration group with less SPS resources, it is possible to save power at the UE and the base station. Furthermore, since this SPS switching mechanism operates at the UE without the need of explicit indications from the base station, control signaling overhead is avoided.

In a corresponding manner, the further solution also provides for the CG switching, the operation of a CG switching counter. Accordingly, the UE operates a CG switching counter (can also be called CG switching timer). The CG switching counter is started when a group of CGs is activated. In case the CG switching counter reaches a CG switching counter threshold, the UE switches from the currently-activated group of CGs to another target group of CGs. For instance, the target CG group can be defined in advance at the UE, e.g. being a default CG group or being configured by the base station at the UE.

The target CG group can be e.g. the CG group with group index = 0. In one exemplary option, the target CG group has only a few CG uplink resources, such that the UE can save power.

There are several possibilities on how the CG switching counter is operated.

In one possibility, the CG switching counter counts the number of consecutive time slots that the currently-activated CG group is already activated but in which the UE does not transmit uplink data to the base station according to said activated CG group. In one variant, the CG switching counter can count down from an initial value of the CG switching counter, and the CG switching counter triggers the group CG switching when it reaches the threshold = 0. In another variant, the CG switching counter can count up from e.g. 0, and when reaching a threshold, the group CG switching is triggered. The CG switching counter is reset when the UE transmits uplink data in one time slot to the base station according to said activated CG group.

In another possibility, rather than counting the number of consecutive time slots, the number of consecutive CG uplink resource opportunities is counted for the CG switching counter. In particular, the CG switching counter counts the number of consecutive CG uplink resource opportunities, provided by the activated CG group, in which the UE does not transmit uplink data to the base station according to the activated CG group. As explained in the variants for the previous possibility, the CG switching counter can count down or up. The CG switching counter is reset when the UE transmits uplink data to the base station in one CG uplink resource opportunity, provided by said activated CG group.

For instance, there might be no uplink data to be transmitted to the base station, and the CG uplink resources might not be needed. By switching to another target CG group with less CG resources, it is possible to save power at the UE and the base station. Furthermore, since this CG switching mechanism operates at the UE without the need of explicit indications from the base station, control signaling overhead is avoided.

### Fifth solution - enhanced SSS group switching procedure

As briefly mentioned in the above overview, an improved power saving procedure is presented herein, which enhances an SSS (Search Space Set) Group switching procedure to also allow to instruct the UE to switch either one or both of the currently-used SPS configuration(s) and CG(s).

For this fifth solution, similar assumptions can be made as for the first to fourth solutions, particularly including the configuration of SPS resources based on one or more SPS downlink resource configurations, such as the RRC IE *SPS-Config.* Thus, downlink data can be transmitted by the base station to the UE using the active SPS configuration(s).

In addition or alternatively, it is exemplarily assumed that the UE is configured with CG uplink resources based on corresponding one or more CGs, as assumed for the first solution. Thus, the UE can use the periodic uplink resources provided by one or more active CGs to transmit uplink data to the base station.

Moreover, it is assumed that the UE and base station can perform a procedure for switching between different search space set (SSS) groups for monitoring the PDCCH. The different SSS groups can e.g. differ by when and/or how long the UE is required to monitor the PDCCH during a slot. The various SSS groups comprise various search space sets. A single search space set can be part of more than one SSS group.

According to one exemplary implementation, the switching between the different SSS groups is mainly controlled by two mechanisms, i.e. an SSS group switching indication provided by the base station to the UE and a switching timer. One example of such a procedure was explained above in connection with 3GPP 5G NR, particularly 3GPP TS 38.213 section 10.4.

This SSS group switching procedure is enhanced according to the fifth solution so as to also trigger a switching of the SPS configuration and/or CG. In particular, a target SSS group is associated with one or more of a CG or SPS configuration, such that when the UE switches to the target SSS group, the UE is also triggered to switch to the associated CG or SPS configuration.

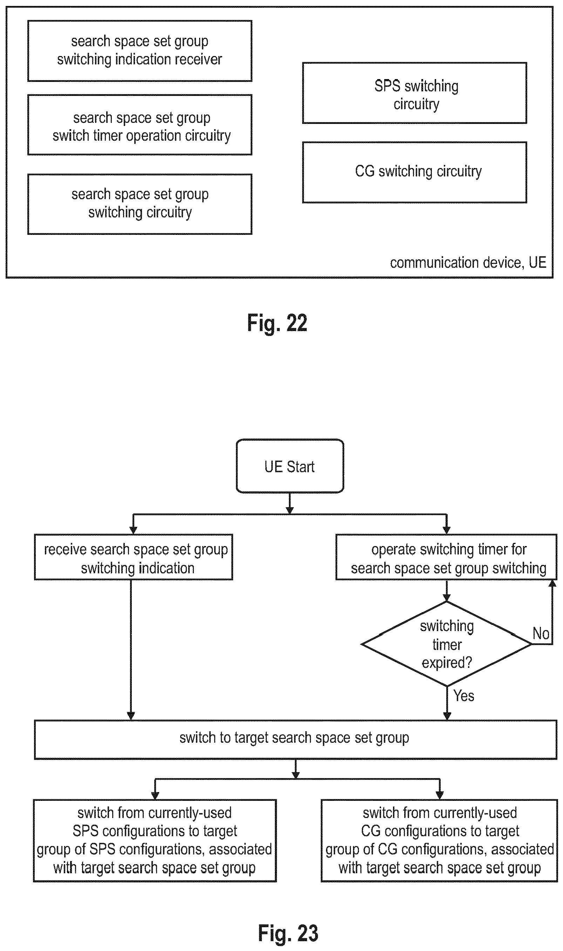

Fig. 22 illustrates a simplified and exemplary UE structure according to an exemplary implementation of the improved power saving procedure of the fifth solution, which can be implemented based on the general UE structure explained in connection with Fig. 8. The various structural elements of the UE illustrated in said Fig. 22 can be interconnected between one another e.g. with corresponding input/output nodes (not shown) e.g. in order to exchange control and user data and other signals. Although not shown for illustration purposes, the UE may include further structural elements.

As apparent from Fig. 22, the UE may include a search space set group switching indication receiver, a search space set group switch timer operation circuitry, a search space set group switching circuity, an SPS switching circuitry, and a CG switching circuitry.

In the present case as will become apparent from the below disclosure, the receiver of the UE can thus be exemplarily configured to at least partly perform one or more of receiving a search space set group switching indication, receiving downlink data, etc.

In the present case as will become apparent from the below disclosure, the processing circuitry of the UE can thus be exemplarily configured to at least partly perform one or more of determining a target SSS group, operating the SSS group switching timer, switching between different SSS groups, determining a target SPS configuration and a target CG from the target SSS group, switching between SPS configurations, switching between CGs, etc.

In the present case as will become apparent from the below disclosure, the transmitter of the UE can thus be exemplarily configured to at least partly perform one or more of transmitting uplink data to the base station, transmitting uplink control information regarding reception feedback, etc.

One exemplary procedure as will be disclosed in more detail further below is implemented by a UE that includes the following. A receiver receives a search space set, SSS, group switching indication from the base station, wherein the SSS group switching indication indicates to the UE to switch to a target SSS group. Further, a processing circuitry of the UE switches from a currently-used SSS group to the target SSS group, indicated by the SSS group switching indication. The processing circuitry operates an SSS group switching timer for the currently-used SSS group, and at expiry of the SSS group switching timer, the processing circuitry switches from the currently-used SSS group to a target SSS group.

Moreover, it is assumed that the UE is configured with a plurality of SPS downlink resource configurations. The processing circuitry, when switching to the target SSS group (e.g. based on either of the SSS group switching indication and the SSS group switching timer), switches from an activated SPS downlink resource configuration to another SPS downlink resource configuration, based on an association between the target SSS group and the another SPS downlink resource configuration.

In addition or alternatively to being configured with a plurality of SPS downlink configurations, the UE is configured with a plurality of CGs. The processing circuitry, when switching to the target SSS group (e.g. based on either of the SSS group switching indication and the SSS group switching timer), switches from an activated configured uplink resource grant to another configured uplink resource grant, based on an association between the target SSS group and the another configured uplink resource grant.

The fifth solution also provides a corresponding method to be performed by the UE. A sequence diagram for an exemplary UE behaviour in line with the above discussed UE and UE method of the fifth solution is illustrated in Fig. 23. Both Fig. 22 and 23 exemplarily illustrate a UE behaviour which can handle both group SPS switching and group CG switching. However, it is equally possible according to the fifth solution that the UE is such that it operates to handle only one of group SPS switching and group CG switching as a result of the SSS group switching.

The improved power saving procedure of the fifth solution allows to easily switch to target SPS configurations respectively target CGs. The SPS / CG switching is achieved without additional signaling overhead, because it is triggered by the switching of the SSS group. Thus, power saving can be achieved. Furthermore, because of reusing an existing SSS group switching mechanism (such as the one from 3GPP) to implement the SPS / CG switching behaviour, the impact of defining the 3PGP standard is less.

Some exemplary implementations of the improved power saving procedure also involve the base station, to which the UE is currently connected (termed e.g. serving base station because the base station serves the UE). Correspondingly, the improved power saving procedure also provides an improved base station that participates therein, e.g. with a behaviour that corresponds to the above explained UE behaviour.

In the following, more specific implementations and variants of the above discussed operations of the fourth solution will be described. The description will be presented mainly from the UE side and is applicable in a corresponding manner to the base station side.

In some exemplary implementations of the fifth solution, the SSS group switching indication can be transmitted by the base station in a suitable downlink control signal, such as a DCI.

According to one possible variant, the SSS group switching indication can be transmitted together with the configured-resources skipping indication of the first solution, or together with the combined skipping indication of the second solution. In addition, the SPS switching indication can be transmitted together with the SPS or CG activation/deactivation indication of the third solution.

Similarly, the CG switching indication can be transmitted together with the configured-resources skipping indication of the first solution, or together with the combined skipping indication of the second solution. In addition, the CG switching indication can be transmitted together with the SPS or CG activation/deactivation indication of the third solution.

The SSS group switching indication can include a corresponding ID or index for identifying the target SSS group.

According to one example, the SSS group switching timer counts the number of consecutive time slots that the UE monitors the PDCCH based on the currently-active SSS group. In one variant, the SSS group switching timer can count up or down, and when reaching a corresponding threshold, the UE switches from the currently-active SSS group to the target SSS group. In other words, the UE starts monitoring the PDCCH according to the target SSS group, and stops monitoring the PDCCH according to the currently-used SSS group.

According to one exemplary implementation, the target SSS group to which the UE switches after timer expiry can be e.g. the SSS group with the index 0, which e.g. corresponds to a default SSS group fixed for the base station and the UE. Alternatively, the target SSS group used after reaching a time threshold can be configured by the base station at the UE, e.g. based on the RRC protocol.

As mentioned above, the switching of the SPS configuration and/or the CG depends on the target SSS group to which the UE switches. In particular, an association between the different SSS groups and the SPS configurations respectively the CGs can be defined. For instance, the SSS-group-to-SPS association and the SSS-group-to-CG association can be fixed between the UE and base station, e.g. as defined by the operating system of the UE or base station (e.g. according to a 3GPP standard) or can be fixed by a network operator. According to another option, the association(s) can determined by the base station and configured at the UE, e.g. via RRC.

There are several options on which SPS configuration respectively CG is associated with which SSS group. In one exemplary option, the association of the SPS configuration respectively CG is such that the SPS respectively CG and the SSS group are aligned with one or more of the traffic periodicity and the traffic characteristics.

In summary, based on these association(s) the UE and base station can switch between the SPS configurations respectively the CGs, depending on which SSS group the UE currently uses. This solution allows to reduce the impact on the 3GPP standard specifications because it is based and thus reuses existing mechanism agreed already by 3GPP. Furthermore, control overhead is not increased by this solution, because the SPS and CG switching is performed as a result of the SSS group change, without any explicit instructions.

### Sixth solution - combination of procedures

As briefly mentioned in the above overview, an improved power saving procedure is presented herein, which allows to combine two or more or all of the above indicated first to fifth solutions.

In the above, the five solutions (and its variations and implementations) were described mostly separately and independently from one another. Consequently, the UE and base station may support only one of the above five solutions. On the other hand, the UE and base station may support operation according to two or more or all of the first to fifth solutions at the same time, so as to achieve synergetic effects. The energy saving and flexibility can be increased by applying more than one energy saving mechanism.

In further exemplary implementations, two, more or all of the above five solutions can be combined to reuse signaling. For instance, the first to fifth solutions provide the following different control signals: the SPS respectively CG skipping indication (first solution), the combined skipping solution (be it regard PDCCH + SPS, PDCCH+CG, or PDCCH+SPS+CG; second solution), the SPS respectively CG activation or deactivation indication (third solution), the SPS respectively CG group switching indication (fourth solution), and the SSS group switching indication (fifth solution).

These control signals are transmitted by the base station to the UE to achieve power saving at the UE. Rather than transmitting the five control signals separately, one exemplary implementation allows to transmit some or all of the control signals together in one signal, e.g. one DCI.

### Further Aspects

According to a first aspect, a user equipment, is provided that includes the following. A receiver of the UE receives, from a base station, a configured-resources skipping indication. The configured-resources skipping indication indicates that the UE is allowed to perform one or more of the following actions:
- skipping a process related to one or more configured uplink resource grants, and
- skipping a process related to one or more semi-persistent, SPS, downlink resource configurations,

A processing circuitry of the UE skips, in response to the received configured-resources skipping indication, the one or more processes during a configured-resources skipping time period.

According to a second aspect provided in addition to the first aspect, the performed action of skipping the process includes one or more of:
- skipping to monitor downlink resources for receiving downlink data from the base station according to the one or more SPS downlink resource configurations,
- skipping to monitor a downlink control channel for downlink control information from the base station regarding reception feedback for uplink data transmitted by the UE using uplink resources according to the one or more configured uplink resource grants,
- skipping to transmit uplink data to the base station using uplink resources according to the one or more configured uplink resource grants, and
- skipping to transmit, to the base station, uplink control information regarding reception feedback for downlink data received according to the one or more SPS downlink resource configurations.

In an optional implementation of this second aspect, the processing circuitry, in response to the received configured-resources skipping indication, performs one or more of the following actions:
- skipping, during the monitoring skipping time period, to monitor the downlink control channel for downlink control information from the base station related to a deactivation of the one or more configured uplink resource grants or of the one or more SPS downlink resource configurations,
- skipping, during the monitoring skipping time period, to monitor the downlink control channel for downlink control information from the base station related to an activation of the one or more configured uplink resource grants or of the one or more SPS downlink resource configurations.

According to a third aspect provided in addition to the first or second aspect, the processing circuitry determines when to begin the action of skipping the process:
- as a beginning of a time slot that is subsequent to the time slot during which the configured-resources skipping indication is received by the UE,
- for an SPS-related process, as a point in time after an offset of a number of N SPS downlink resource opportunities provided by the respective SPS downlink resource configuration,
- for a CG-related process, as a point in time after an offset of a number of N configured uplink resource opportunities provided by the respective configured uplink resource grant.

In an optional implementation of the third aspect, the processing circuitry determines the offset based on:
- information stored in the UE, optionally wherein the stored information is configured by the base station, or
- a value indicated by the configured-resource skipping indication.

In a further optional implementation of the third aspect, the configured-resources skipping time period is defined in terms of time slots of a subframe.

According to a fourth aspect provided in addition to one of the first to third aspects, the receiver receives the configured-resources skipping indication in a downlink control signal, transmitted by the base station to carry the configured-resources skipping indication, or wherein the receiver receives the configured-resources skipping indication in addition to a monitoring skipping indication in a downlink control signal from the base station.

In an optional implementation of the fourth aspect, the processing circuitry determines the configured-resources skipping time period from:
- information stored in the UE, optionally wherein the stored information is configured by the base station, or
- a value indicated by the configured-resources skipping indication.

In a further optional implementation of the fourth aspect, the processing circuitry determines the configured-resources skipping time period based on:
- the SPS downlink resource configuration for which a process is to be skipped and based on an association between different configured-resources skipping time periods and different SPS downlink resource configurations, or
- the configured uplink resource grant for which a process is to be skipped and based on an association between different configure-resource skipping time periods and different configured uplink resource grants, or
- the reception-success feedback process associated with the SPS downlink resource configuration or the configured uplink resource grant for which the process is to be skipped and based on an association between different configured-resources skipping time periods and different reception-success feedback processes, optionally wherein the reception-success feedback process is a Hybrid-automatic repeat request, HARQ, process.

According to a fifth aspect, provided in addition to one of the first to fourth aspects, the UE is configured with a plurality of SPS downlink resource configurations. The processing circuitry determines the one or more SPS downlink resource configurations among the plurality of SPS downlink resource configurations. The action of skipping the process is performed for the determined one or more SPS downlink resource configurations.

In an optional implementation of the fifth aspect, the determining of the one or more SPS downlink resource configurations is performed based on information included in the received configured-resources skipping indication.

In a further optional implementation of the fifth aspect, the received information is:
- a bitmap, wherein each bit of the bitmap is associated with one of the plurality of SPS downlink resource configurations and indicates whether or not the action of skipping the process is to be performed for the associated SPS downlink resource configuration, or
- one or more group indexes, and wherein the determining is further based on an association between each group index and one or more of the plurality of SPS downlink resource configurations, optionally wherein the receiver receives the association from the base station in a message of a Radio Resource Control, RRC, protocol.

According to a sixth aspect, provided in addition to the fifth aspect, the determining of the one or more SPS downlink resource configurations is performed based on a priority threshold, by comparing a priority of each of the plurality of SPS downlink resource configurations against the priority threshold.

In an optional implementation of the sixth aspect, the processing circuitry determines the one or more SPS downlink resource configurations for which the action of skipping the process is to be performed as those with a priority that is equal to or lower than the priority threshold.

In a further optional implementation of the sixth aspect, the processing circuitry determines the priority threshold based on information in the configured-resources skipping indication, said information being
- information on the priority threshold, or
- a monitoring skipping time period during which the UE is allowed to skip monitoring a downlink control channel, optionally wherein the processing circuitry determines the priority threshold from the indicated monitoring skipping time period based on a
relationship according to which the longer the indicated monitoring skipping time period the lower the priority threshold, and vice versa.

According to a seventh aspect provided in addition to one of the first to sixth aspects, the UE is configured with a plurality of configured uplink resource grants. The processing circuitry determines the one or more configured uplink resource grants among the plurality of configured uplink resource grants. The action of skipping the process is performed for the determined one or more configured uplink resource grants.

In an optional implementation of the seventh aspect, the determining of the one or more configured uplink resource grants is performed based on information included in the received configured-resources skipping indication.

In a further optional implementation of the seventh aspect, the received information is:
- a bitmap, wherein each bit of the bitmap is associated with one of the plurality of configured uplink resource grants and indicates whether or not the action of skipping the process is to be performed for the associated configured uplink resource grant, or
- one or more group indexes, and wherein the determining is further based on an association between each group index and one or more of the plurality of configured uplink resource grants, optionally wherein the receiver receives the association from the base station in a message of a Radio Resource Control, RRC, protocol.

According to an eighth aspect provided in addition to seventh aspect, the determining of the configured uplink resource grants is performed based on a priority threshold, by comparing a priority of each of the plurality of configured uplink resource grants against the priority threshold.

In an optional implementation of the eighth aspect, the processing circuitry determines the one or more configured uplink resource grants for which the action of skipping the process is to be performed as those with a priority that is equal to or lower than the priority threshold.

In a further optional implementation of the eighth aspect, the processing circuitry determines the priority threshold based on information in the configured-resources skipping indication, said information being
- information on the priority threshold, or
- a monitoring skipping time period during which the UE is allowed to skip monitoring a downlink control channel, optionally wherein the processing circuitry determines the priority threshold from the indicated monitoring skipping time period based on a
relationship according to which the longer the indicated monitoring skipping time period the lower the priority threshold, and vice versa.

According to a ninth aspect provided in addition to any one of the first to third aspects, the receiver receives a monitoring skipping indication in a downlink control signal from the base station. The processing circuitry interprets the received monitoring skipping indication as the configured-resources skipping indication and as the monitoring skipping indication.

In an optional implementation, the monitoring skipping indication indicates that the UE is allowed to skip monitoring a downlink control channel during a monitoring skipping time period. The processing circuitry skips, in response to the monitoring skipping indication, monitoring the downlink control channel for downlink control information from the base station during the monitoring skipping time period, optionally wherein the monitoring skipping time period is defined in terms of time slots of a subframe.

According to a tenth aspect provided in addition to the ninth aspect, the processing circuity performs, in response to the received monitoring skipping indication, indicating that the UE is allowed to skip monitoring the downlink control channel during a monitoring skipping time period , one or more of the following actions:
- continuing, during the monitoring skipping time period, to monitor the downlink control channel for downlink control information from the base station related to the one or more configured uplink resource grants, and
- continuing, during the monitoring skipping time period, to monitor the downlink control channel for downlink control information from the base station related to the one or more SPS downlink resource configurations.

In an optional implementation of the tenth aspect, the performed action of continuing includes one or more of:
- continuing, during the monitoring skipping time period, to monitor the downlink control channel for downlink control information from the base station related to reception feedback for uplink data transmitted by the UE using uplink resources according to the one or more configured uplink resource grants,
- continuing, during the monitoring skipping time period, to monitor the downlink control channel for downlink control information from the base station related to a deactivation of the one or more configured uplink resource grants or of the one or more SPS downlink resource configurations,
- continuing, during the monitoring skipping time period, to monitor the downlink control channel for downlink control information from the base station related to an activation of the one or more configured uplink resource grants or of the one or more SPS downlink resource configurations.

According to an eleventh aspect provided in addition to any one of the first to tenth aspects, an SPS downlink resource configuration configures a set of periodic downlink radio resources usable by the base station to transmit downlink data to the UE without receiving individual downlink scheduling information via downlink control information from the base station. Furthermore, a configured uplink resource grant configures a set of periodic uplink radio resources usable by the UE to transmit uplink data to the base station without a prior scheduling request from the UE to the base station.

According to a twelfth aspect provided in addition to any one of the first to eleventh aspects, the UE is configured with a plurality of SPS downlink resource configurations. The receiver receives an SPS activation/deactivation indication from the base station. The processing circuitry determines two or more SPS downlink resource configurations among the plurality of SPS downlink resource configurations to be activated/deactivated based on information included in the received SPS activation/deactivation indication. The processing circuitry activates/deactivates the two or more SPS downlink resource configurations based on the received SPS activation/deactivation indication.

In an optional implementation of the twelfth aspect, the received information is:
- a bitmap, wherein each bit of the bitmap is associated with one of the plurality of SPS downlink resource configurations and indicates whether or not the associated SPS downlink resource configuration is to be activated/deactivated, or
- one or more group indexes, and wherein the determining is further based on an association between each group index and two or more SPS downlink resource configurations, optionally wherein the receiver receives the association from the base station in a message of a Radio Resource Control, RRC, protocol.

According to a thirteenth aspect, provided in addition to the twelfth aspect, the determining of the two or more SPS downlink resource configurations to be activated/deactivated is performed based on a priority threshold, by comparing a priority of each of the plurality of SPS downlink resource configurations against the priority threshold.

In an optional implementation of the thirteenth aspect, the processing circuitry determines the one or more SPS downlink resource configurations to be activated/deactivated as those with a priority that is equal to or lower than the priority threshold.

In a further optional implementation of the thirteenth aspect, the processing circuitry determines the priority threshold based on information in the SPS activation/deactivation indication, said information being information on the priority threshold.

According to a fourteenth aspect, provided in addition to any one of the first to thirteenth aspects, the UE is configured with a plurality of configured uplink resource grants. The receiver receives a CG activation/deactivation indication from the base station. The processing circuitry determines two or more configured uplink resource grants among the plurality of configured uplink resource grants to be activated/deactivated based on information included in the received CG activation/deactivation indication. The processing circuitry activates/deactivates the two or more configured uplink resource grants based on the received CG activation/deactivation indication.

In an optional implementation, the received information is:
- a bitmap, wherein each bit of the bitmap is associated with one of the plurality of configured uplink resource grants and indicates whether or not the associated configured uplink resource grant is to be activated/deactivated, or
- one or more group indexes, and wherein the determining is further based on an association between each group index and two or more configured uplink resource grants, optionally wherein the receiver receives the association from the base station in a message of a Radio Resource Control, RRC, protocol.

According to a fifteenth aspect, provided in addition to the fourteenth aspect, the determining of the one or more configured uplink resource grants to be activated/deactivated is performed based on a priority threshold, by comparing a priority of each of the plurality of configured uplink resource grants against the priority threshold.

In an optional implementation of the fifteenth aspect, the processing circuitry determines the one or more configured uplink resource grants to be activated/deactivated as those with a priority that is equal to or lower than the priority threshold.

In a further optional implementation of the fifteenth aspect, the processing circuitry determines the priority threshold based on information in the CG activation/deactivation indication, said information being information on the priority threshold.

According to a sixteenth aspect, provided in addition to any one of the first to fifteenth aspects, wherein the UE is configured with a plurality of SPS downlink resource configurations. The receiver receives an SPS switch indication, including a group index, from the base station. The processing circuitry determines a target group of SPS downlink resource configuration based on the group index in the received SPS switch indication. The processing circuitry switches from a currently-used group SPS downlink resource configurations to the determined target group of SPS downlink resource configuration.

In an optional implementation of the sixteenth aspect, the determination of the target group of SPS downlink resource configuration is further based on an association between each group index and one or more SPS downlink resource configurations.

According to a seventeenth aspect, provided in addition to any one of the first to sixteenth aspects, the UE is configured with a plurality of configured uplink resource grants. The receiver receives a CG switch indication, including a group index, from the base station. The processing circuitry determines a target group of configured uplink resource grants based on the group index in the received CG switch indication. The processing circuitry switches from a currently-used group of configured uplink resource grants to the determined group of target configured uplink resource grants.

In an optional implementation of the seventeenth aspect, the determination of the target group of configured uplink resource grants is further based on an association between each group index and one or more configured uplink resource grants.

According to a eighteenth aspect, provided in addition to any one of the first to seventeenth aspects, the UE is configured with a plurality of SPS downlink resource configurations. The processing circuitry operates an SPS switching counter. The SPS switching counter is started when a group of SPS downlink resource configurations is activated. In case the SPS switching counter reaches an SPS switching counter threshold, the processing circuitry switches from the activated group of SPS downlink resource configurations to another target group of SPS downlink resource configurations. Optionally, the other target group of SPS downlink resource configurations is defined per default or is defined by a configuration in the UE.

The SPS switching counter counts:
- the number of consecutive time slots the activated group of SPS downlink resource configurations is activated but in which the UE does not receive downlink data from the base station according to the activated group of SPS downlink resource configurations. Optionally, the SPS switching counter is reset when the UE receives in one time slot downlink data from the base station according to the activated group of SPS downlink resource configurations.
   ∘ or
- the number of consecutive SPS downlink resource opportunities, provided by the activated group of SPS downlink resource configurations, in which the UE does not receive downlink data from the base station according to the activated group of SPS downlink resource configurations. Optionally, the SPS switching counter is reset when the UE receives in one SPS downlink resource opportunity downlink data from the base station according to the activated group of SPS downlink resource configurations.

According to a nineteenth aspect, provided in addition to any one of the first to eighteenth aspects, the UE is configured with a plurality of configured uplink resource grants. The processing circuitry operates a CG switching counter. The CG switching counter is started when a group of configured uplink resource grants is activated. In case the CG switching counter reaches a CG switching counter threshold, the processing circuitry switches from the activated group of configured uplink resource grants to another target group of configured uplink resource grants. Optionally, the other target group of configured uplink grants is defined per default or is defined by a configuration in the UE.

The CG switching counter counts:
- the number of consecutive time slots the activated group of configured uplink resource grants is activated but in which the UE does not transmit uplink data to the base station using uplink resources according to the activated group of configured uplink resource grants. Optionally, the CG switching counter is reset when the UE transmits in one time slot uplink data to the base station according to the activated group of configured uplink resource grants.
   ∘ or
- the number of consecutive configured uplink resource opportunities, provided by the activated group of configured uplink resource grants, for which the UE does not transmit uplink data to the base station using uplink resources according to the activated group of configured uplink resource grants. Optionally, the CG switching counter is reset when the UE transmits in one configured uplink resource opportunity uplink data to the base station according to the activated group of configured uplink resource grants.

According to a 20^{th} aspect, provided in addition to any one of the first to nineteenth aspects, the receiver receives a search space set, SSS, group switching indication from the base station. The

SSS group switching indication indicates to the UE to switch to a target SSS group. The processing circuitry switches from a currently-used SSS group to the target SSS group, indicated by the SSS group switching indication. The processing circuitry operates an SSS group switching timer for the currently-used SSS group. At expiry of the SSS group switching timer, the processing circuitry switches from the currently-used SSS group to a target SSS group. The processing circuitry, when switching to the target SSS group based on either of the SSS group switching indication and the SSS group switching timer, performs one or more of
- switching from an activated SPS downlink resource configuration to another SPS downlink resource configuration, based on an association between the target SSS group and the another SPS downlink resource configuration, and
- switching from an activated configured uplink resource grant to another configured uplink resource grant, based on an association between the target SSS group and the another configured uplink resource grant.

According to a 21^{st} aspect, a method is provided comprising the following steps performed by a user equipment, UE:
receiving, from a base station, a configured-resources skipping indication, wherein the configured-resources skipping indication indicates that the UE is allowed to perform one or more of the following actions:
   - skipping a process related to one or more configured uplink resource grants, and
   - skipping a process related to one or more semi-persistent, SPS, downlink resource configurations,
skipping, in response to the received configured-resources skipping indication, the one or more processes during a configured-resources skipping time period. According to a 22^{nd} aspect, a base station is provided comprising the following. A transmitter transmits to a user equipment, UE, a configured-resources skipping indication. The configured-resources skipping indication indicates that the UE is allowed to perform one or more of the following actions:
   - skipping a process related to one or more configured uplink resource grants, and
   - skipping a process related to one or more semi-persistent, SPS, downlink resource configurations,

Processing circuitry of the base station, skips, in response to the transmitted configured-resources skipping indication, during a configured-resources skipping time period, to perform base station processes that correspond to the one or more processes to be skipped by the UE.

According to a 23^{rd} aspect, provided in addition to the 22^{nd} aspect, the one or more base station processes include one or more of:
- skipping to transmit downlink data to the UE according to the one or more SPS downlink resource configurations,
- skipping to transmit downlink control information via a downlink control channel to the UE regarding reception feedback for uplink data transmitted by the UE using uplink resources according to the one or more configured uplink resource grants,
- skipping to monitor uplink resources for receiving uplink data from the UE using uplink resources according to the one or more configured uplink resource grants,
- skipping to monitor uplink resources for receiving from the UE uplink control information regarding reception feedback for downlink data transmitted according to the one or more SPS downlink resource configurations.

In an optional implementation of the 23^{rd} aspect, the processing circuitry, in response to the transmitted configured-resources skipping indication, performs one or more of the following actions:
- skipping, during the monitoring skipping time period, to transmit downlink control information on the downlink control channel to the UE related to a deactivation of the one or more configured uplink resource grants or of the one or more SPS downlink resource configurations,
- skipping, during the monitoring skipping time period, to transmit downlink control information on the downlink control channel to the UE related to an activation of the one or more configured uplink resource grants or of the one or more SPS downlink resource configurations.

According to a 24^{th} aspect, provided in addition to the 22^{nd} or 23^{rd} aspects, the transmitter transmits the configured-resources skipping indication in a downlink control signal to the UE. Alternatively, the transmitter transmits the configured-resources skipping indication in addition to a monitoring skipping indication in a downlink control signal to the UE. The processing circuitry determines the configured-resources skipping time period.

In an optional implementation of the 24^{th} aspect, the transmitter transmits a configuration message to the UE, including the determined configured-resources skipping time period. In a further optional implementation of the 24^{th} aspect, the transmitter transmit the determined configured-resources skipping time period together with the configured-resources skipping indication in the downlink control signal.

According to a 25^{th} aspect, provided in addition to any one of the 22^{nd} to the 24^{th} aspects, the transmitter transmits a monitoring skipping indication in a downlink control signal to the UE, the monitoring skipping indication also being the configured-resources skipping indication.

In an optional implementation of the 25^{th} aspect, the monitoring skipping indication indicates that the UE is allowed to skip monitoring a downlink control channel during a monitoring skipping time period. The processing circuitry, in response to transmitting the monitoring skipping indication, skips transmitting downlink control information via the downlink control channel to the UE during the monitoring skipping time period. Optionally, the monitoring skipping time period is defined in terms of time slots of a subframe.

According to a 26^{th} aspect, provided in addition to the 25^{th} aspect, the processing circuitry, in response to transmitting the monitoring skipping indication, performs one or more of the following actions:
- continuing, during the monitoring skipping time period, to transmit downlink control information via the downlink control channel to the UE related to the one or more configured uplink resource grants,
- continuing, during the monitoring skipping time period, to transmit downlink control information via the downlink control channel to the UE related to the one or more SPS downlink resource configuration,

In an optional implementation of the 26^{th} aspect, the performed action of continuing includes one or more of:
- continuing, during the monitoring skipping time period, to transmit downlink control information via the downlink control channel to the UE related to reception feedback for uplink data transmitted by the UE using uplink resources according to the one or more configured uplink resource grants,
- continuing, during the monitoring skipping time period, to transmit downlink control information via the downlink control channel to the UE related to a deactivation of the one or more configured uplink resource grants or of the one or more SPS downlink resource configurations,
- continuing, during the monitoring skipping time period, to transmit downlink control information via the downlink control channel to the UE related to an activation of the one or more configured uplink resource grants or of the one or more SPS downlink resource configurations.

According to a 27^{th} aspect, provided in addition to any one of the 22^{nd} to 26^{th} aspects, the UE is configured with a plurality of SPS downlink resource configurations. The processing circuitry determines two or more SPS downlink resource configurations among the plurality of SPS downlink resource configurations to be activated/deactivated. The transmitter transmits an SPS activation/deactivation indication to the UE, including information on the determined two or more SPS downlink resource configurations to be activated/deactivated. The processing circuitry activates/deactivates the determined two or more SPS downlink resource configurations.

In an optional implementation of the 27^{th} aspect, the information on the determined two or more SPS downlink resource configurations is:
- a bitmap, wherein each bit of the bitmap is associated with one of the plurality of SPS downlink resource configurations and indicates whether or not the associated SPS downlink resource configuration is to be activated/deactivated, or
- one or more group indexes, each of which being determined based on association between a group index and two or more SPS downlink resource configurations, optionally wherein the transmitter transmits the association to the UE in a message of a Radio Resource Control, RRC, protocol.

According to a 28th aspect, provided in addition to the 27^{th} aspect, the information on the determined two or more SPS downlink resource configurations is a priority threshold. The processing circuitry determines the priority threshold such that the two or more SPS downlink resource configurations to be activated/deactivated are those with a priority that is equal to or lower than the priority threshold.

According to a 29^{th} aspect, provided in addition to any one of the 22^{nd} to 28^{th} aspects, the UE is configured with a plurality of configured uplink resource grants. The processing circuitry determines two or more configured uplink resource grants among the plurality of configured uplink resource grants to be activated/deactivated. The transmitter transmits a CG activation/deactivation indication to the UE, including information on the determined two or more configured uplink resource grants to be activated/deactivated. The processing circuitry activates/deactivates the determined two or more configured uplink resource grants.

In an optional implementation, the information on the determined two or more configured uplink resource grants is:
- a bitmap, wherein each bit of the bitmap is associated with one of the plurality of configured uplink resource grants and indicates whether or not the associated configured uplink resource grant is to be activated/deactivated, or
- one or more group indexes, each of which being determined based on association between a group index and two or more configured uplink resource grants, optionally wherein the transmitter transmits the association to the UE in a message of a Radio Resource Control, RRC, protocol, or
- a priority threshold, wherein the processing circuitry determines the priority threshold such that the two or more SPS downlink resource configurations to be activated/deactivated are those with a priority that is equal to or lower than the priority threshold.

According to a 30^{th} aspect, provided in addition to any one of the 22^{nd} to 29^{th} aspects, the UE is configured with a plurality of SPS downlink resource configurations. The processing circuitry determines a target group of SPS downlink resource configurations. The transmitter transmits an SPS switch indication to the UE, the SPS switch indication including a group index, associated with the determined target group of SPS downlink resource configurations.

According to a 31^{st} aspect, provided in addition to any one of the 22^{nd} to 30^{th} aspects, the UE is configured with a plurality of configured uplink resource grants. The processing circuitry determines a target group of configured uplink resource grants. The transmitter transmits a CG switch indication to the UE, the CG switch indication including a group index, associated with the determined target group of configured uplink resource grants.

According to a 32^{nd} aspect, provided in addition to any one of the 22^{nd} to 31^{st} aspects, the processing circuitry determines a target search space set, SSS, group for the UE. The transmitter transmits an SSS group switching indication to the UE, wherein the SSS group switching indication indicates to the UE to switch to the determined target SSS group. The processing circuitry switches from a currently-used SSS group to the target SSS group, in response to transmitting the SSS group switching indication. The processing circuitry operates an SSS group switching timer for the currently-used SSS group, and at expiry of the SSS group switching timer, the processing circuitry switches from the currently-used SSS group to a target SSS group. The processing circuitry, when switching to the target SSS group based on either of the SSS group switching indication and the SSS group switching timer, performs one or more of
- switching from an activated SPS downlink resource configuration to another SPS downlink resource configuration, based on an association between the target SSS group and the another SPS downlink resource configuration, and
- switching from an activated configured uplink resource grant to another configured uplink resource grant, based on an association between the target SSS group and the another configured uplink resource grant.

According to a 33^{rd} aspect, a method is provided method comprising the following steps performed by a base station:
- transmitting to a user equipment, UE, a configured-resources skipping indication, wherein the configured-resources skipping indication indicates that the UE is allowed to perform one or more of the following actions:
   ∘ skipping a process related to one or more configured uplink resource grants, and
   ∘ skipping a process related to one or more semi-persistent, SPS, downlink resource configurations,
- in response to the transmitted configured-resources skipping indication, skipping, during a configured-resources skipping time period, to perform base station processes that correspond to the one or more processes to be skipped by the UE.

According to a 34^{th} aspect, an integrated circuit is provided , which controls a process of a user equipment, the process comprising the following steps performed by the user equipment:
- receiving, from a base station, a configured-resources skipping indication, wherein the configured-resources skipping indication indicates that the UE is allowed to perform one or more of the following actions:
   ∘ skipping a process related to one or more configured uplink resource grants, and
   ∘ skipping a process related to one or more semi-persistent, SPS, downlink resource configurations,
- skipping, in response to the received configured-resources skipping indication, the one or more processes during a configured-resources skipping time period.

According to 35^{th} aspect, an integrated circuit is provided which controls a process of a base station, the process comprising the following steps performed by the base station:
- transmitting to a user equipment, UE, a configured-resources skipping indication, wherein the configured-resources skipping indication indicates that the UE is allowed to perform one or more of the following actions:
   ∘ skipping a process related to one or more configured uplink resource grants, and
   ∘ skipping a process related to one or more semi-persistent, SPS, downlink resource configurations,
- in response to the transmitted configured-resources skipping indication, skipping, during a configured-resources skipping time period, to perform base station processes that correspond to the one or more processes to be skipped by the UE.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation, receives, from a base station, a configured-resources skipping indication, wherein the configured-resources skipping indication indicates that the UE is allowed to perform one or more of the following actions:
• skipping a process related to one or more configured uplink resource grants, and
• skipping a process related to one or more semi-persistent, SPS, downlink resource configurations,
processing circuitry, which in operation and in response to the received configured-resources skipping indication, skips the one or more processes during a configured-resources skipping time period.

2. The UE according to claim 1, wherein the performed action of skipping the process includes one or more of:
• skipping to monitor downlink resources for receiving downlink data from the base station according to the one or more SPS downlink resource configurations,
• skipping to monitor a downlink control channel for downlink control information from the base station regarding reception feedback for uplink data transmitted by the UE using uplink resources according to the one or more configured uplink resource grants,
• skipping to transmit uplink data to the base station using uplink resources according to the one or more configured uplink resource grants, and
• skipping to transmit, to the base station, uplink control information regarding reception feedback for downlink data received according to the one or more SPS downlink resource configurations,
optionally wherein the processing circuitry, when in operation and in response to the received configured-resources skipping indication, performs one or more of the following actions:
µ skipping, during the monitoring skipping time period, to monitor the downlink control channel for downlink control information from the base station related to a deactivation of the one or more configured uplink resource grants or of the one or more SPS downlink resource configurations,
• skipping, during the monitoring skipping time period, to monitor the downlink control channel for downlink control information from the base station related to an activation of the one or more configured uplink resource grants or of the one or more SPS downlink resource configurations.

3. The UE according to any one of claims 1 to 2, wherein the receiver, when in operation, receives the configured-resources skipping indication in a downlink control signal, transmitted by the base station to carry the configured-resources skipping indication, or wherein the receiver, when in operation, receives the configured-resources skipping indication in addition to a monitoring skipping indication in a downlink control signal from the base station,
optionally wherein the processing circuitry, when in operation, determines the configured-resources skipping time period from:
• information stored in the UE, optionally wherein the stored information is configured by the base station, or
• a value indicated by the configured-resources skipping indication, and
optionally wherein the processing circuitry, when in operation, determines the configured-resources skipping time period based on:
• the SPS downlink resource configuration for which a process is to be skipped and based on an association between different configured-resources skipping time periods and different SPS downlink resource configurations, or
• the configured uplink resource grant for which a process is to be skipped and based on an association between different configure-resource skipping time periods and different configured uplink resource grants, or
• the reception-success feedback process associated with the SPS downlink resource configuration or the configured uplink resource grant for which the process is to be skipped and based on an association between different configured-resources skipping time periods and different reception-success feedback processes , optionally wherein the reception-success feedback process is a Hybrid-automatic repeat request, HARQ, process.

4. The UE according to any one of claims 1 to 3, wherein the UE is configured with a plurality of SPS downlink resource configurations, and
the processing circuitry, when in operation, determines the one or more SPS downlink resource configurations among the plurality of SPS downlink resource configurations, wherein the action of skipping the process is performed for the determined one or more SPS downlink resource configurations,
optionally wherein the determining of the one or more SPS downlink resource configurations is performed based on information included in the received configured-resources skipping indication,
optionally wherein the received information is:
• a bitmap, wherein each bit of the bitmap is associated with one of the plurality of SPS downlink resource configurations and indicates whether or not the action of skipping the process is to be performed for the associated SPS downlink resource configuration, or
• one or more group indexes, and wherein the determining is further based on an association between each group index and one or more of the plurality of SPS downlink resource configurations, optionally wherein the receiver, when in operation, receives the association from the base station in a message of a Radio Resource Control, RRC, protocol.

5. The UE according to claim 4, wherein the determining of the one or more SPS downlink resource configurations is performed based on a priority threshold, by comparing a priority of each of the plurality of SPS downlink resource configurations against the priority threshold,
optionally wherein the processing circuitry determines the one or more SPS downlink resource configurations for which the action of skipping the process is to be performed as those with a priority that is equal to or lower than the priority threshold,
optionally wherein the processing circuitry, when in operation, determines the priority threshold based on information in the configured-resources skipping indication, said information being
• information on the priority threshold, or
• a monitoring skipping time period during which the UE is allowed to skip monitoring a downlink control channel, optionally wherein the processing circuitry, when in operation, determines the priority threshold from the indicated monitoring skipping time period based on a relationship according to which the longer the indicated monitoring skipping time period the lower the priority threshold, and vice versa.

6. The UE according to any one of claims 1 to 5, wherein the UE is configured with a plurality of configured uplink resource grants, and
the processing circuitry, when in operation, determines the one or more configured uplink resource grants among the plurality of configured uplink resource grants, wherein the action of skipping the process is performed for the determined one or more configured uplink resource grants,
optionally wherein the determining of the one or more configured uplink resource grants is performed based on information included in the received configured-resources skipping indication,
optionally wherein the received information is:
• a bitmap, wherein each bit of the bitmap is associated with one of the plurality of configured uplink resource grants and indicates whether or not the action of skipping the process is to be performed for the associated configured uplink resource grant, or
• one or more group indexes, and wherein the determining is further based on an association between each group index and one or more of the plurality of configured uplink resource grants, optionally wherein the receiver, when in operation, receives the association from the base station in a message of a Radio Resource Control, RRC, protocol.

7. The UE according to any one of claims 1 to 2, wherein the receiver, when in operation, receives a monitoring skipping indication in a downlink control signal from the base station, and the processing circuitry, when in operation, interprets the received monitoring skipping indication as the configured-resources skipping indication and as the monitoring skipping indication, and optionally wherein the monitoring skipping indication indicates that the UE is allowed to skip monitoring a downlink control channel during a monitoring skipping time period, and the processing circuitry, when in operation and in response to the monitoring skipping indication, skips monitoring the downlink control channel for downlink control information from the base station during the monitoring skipping time period, optionally wherein the monitoring skipping time period is defined in terms of time slots of a subframe.

8. The UE according to claim 7, wherein the processing circuity, when in operation and in response to the received monitoring skipping indication, indicating that the UE is allowed to skip monitoring the downlink control channel during a monitoring skipping time period , performs one or more of the following actions:
• continuing, during the monitoring skipping time period, to monitor the downlink control channel for downlink control information from the base station related to the one or more configured uplink resource grants, and
• continuing, during the monitoring skipping time period, to monitor the downlink control channel for downlink control information from the base station related to the one or more SPS downlink resource configurations,
optionally wherein the performed action of continuing includes one or more of:
• continuing, during the monitoring skipping time period, to monitor the downlink control channel for downlink control information from the base station related to reception feedback for uplink data transmitted by the UE using uplink resources according to the one or more configured uplink resource grants,
• continuing, during the monitoring skipping time period, to monitor the downlink control channel for downlink control information from the base station related to a deactivation of the one or more configured uplink resource grants or of the one or more SPS downlink resource configurations,
• continuing, during the monitoring skipping time period, to monitor the downlink control channel for downlink control information from the base station related to an activation of the one or more configured uplink resource grants or of the one or more SPS downlink resource configurations.

9. The UE according to any one of claims 1 to 8, wherein the UE is configured with a plurality of SPS downlink resource configurations, and
wherein the receiver, when in operation, receives an SPS activation/deactivation indication from the base station,
the processing circuitry, when in operation, determines two or more SPS downlink resource configurations among the plurality of SPS downlink resource configurations to be activated/deactivated based on information included in the received SPS activation/deactivation indication,
the processing circuitry, when in operation, activates/deactivates the two or more SPS downlink resource configurations based on the received SPS activation/deactivation indication,
optionally wherein the received information is:
• a bitmap, wherein each bit of the bitmap is associated with one of the plurality of SPS downlink resource configurations and indicates whether or not the associated SPS downlink resource configuration is to be activated/deactivated, or
• one or more group indexes, and wherein the determining is further based on an association between each group index and two or more SPS downlink resource configurations, optionally wherein the receiver, when in operation, receives the association from the base station in a message of a Radio Resource Control, RRC, protocol.

10. The UE according to claim 9, wherein the determining of the two or more SPS downlink resource configurations to be activated/deactivated is performed based on a priority threshold, by comparing a priority of each of the plurality of SPS downlink resource configurations against the priority threshold,
optionally wherein the processing circuitry determines the one or more SPS downlink resource configurations to be activated/deactivated as those with a priority that is equal to or lower than the priority threshold,
optionally wherein the processing circuitry, when in operation, determines the priority threshold based on information in the SPS activation/deactivation indication, said information being information on the priority threshold.

11. The UE according to any one of claims 1 to 10, wherein the UE is configured with a plurality of SPS downlink resource configurations, and
wherein the receiver, when in operation, receives an SPS switch indication, including a group index, from the base station,
wherein the processing circuitry, when in operation, determines a target group of SPS downlink resource configuration based on the group index in the received SPS switch indication,
wherein the processing circuitry, when in operation, switches from a currently-used group SPS downlink resource configurations to the determined target group of SPS downlink resource configuration,
optionally wherein the determination of the target group of SPS downlink resource configuration is further based on an association between each group index and one or more SPS downlink resource configurations.

12. The UE according to any one of claims 1 to 11, wherein the UE is configured with a plurality of configured uplink resource grants, and
wherein the receiver, when in operation, receives a CG switch indication, including a group index, from the base station,
wherein the processing circuitry, when in operation, determines a target group of configured uplink resource grants based on the group index in the received CG switch indication,
wherein the processing circuitry, when in operation, switches from a currently-used group of configured uplink resource grants to the determined group of target configured uplink resource grants,
optionally wherein the determination of the target group of configured uplink resource grants is further based on an association between each group index and one or more configured uplink resource grants.

13. The UE according to any one of claims 1 to 12, wherein the UE is configured with a plurality of SPS downlink resource configurations, and
wherein the processing circuitry, when in operation, operates an SPS switching counter, wherein the SPS switching counter is started when a group of SPS downlink resource configurations is activated, wherein in case the SPS switching counter reaches an SPS switching counter threshold, the processing circuitry switches from the activated group of SPS downlink resource configurations to another target group of SPS downlink resource configurations, optionally wherein the other target group of SPS downlink resource configurations is defined per default or is defined by a configuration in the UE,
wherein the SPS switching counter counts:
• the number of consecutive time slots the activated group of SPS downlink resource configurations is activated but in which the UE does not receive downlink data from the base station according to the activated group of SPS downlink resource configurations, optionally wherein the SPS switching counter is reset when the UE receives in one time slot downlink data from the base station according to the activated group of SPS downlink resource configurations, or
• the number of consecutive SPS downlink resource opportunities, provided by the activated group of SPS downlink resource configurations, in which the UE does not receive downlink data from the base station according to the activated group of SPS downlink resource configurations, optionally wherein the SPS switching counter is reset when the UE receives in one SPS downlink resource opportunity downlink data from the base station according to the activated group of SPS downlink resource configurations.

14. The UE according to any one of claims 1 to 13, wherein the receiver, when in operation, receives a search space set, SSS, group switching indication from the base station, wherein the SSS group switching indication indicates to the UE to switch to a target SSS group,
wherein the processing circuitry, when in operation, switches from a currently-used SSS group to the target SSS group, indicated by the SSS group switching indication,
wherein the processing circuitry, when in operation, operates an SSS group switching timer for the currently-used SSS group, and at expiry of the SSS group switching timer, the processing circuitry switches from the currently-used SSS group to a target SSS group,
wherein the processing circuitry, when in operation and when switching to the target SSS group based on either of the SSS group switching indication and the SSS group switching timer, performs one or more of
• switching from an activated SPS downlink resource configuration to another SPS downlink resource configuration, based on an association between the target SSS group and the another SPS downlink resource configuration, and
• switching from an activated configured uplink resource grant to another configured uplink resource grant, based on an association between the target SSS group and the another configured uplink resource grant.

15. A base station comprising:
a transmitter, which in operation, transmits to a user equipment, UE, a configured-resources skipping indication, wherein the configured-resources skipping indication indicates that the UE is allowed to perform one or more of the following actions:
• skipping a process related to one or more configured uplink resource grants, and
• skipping a process related to one or more semi-persistent, SPS, downlink resource configurations,
processing circuitry, which in operation and in response to the transmitted configured-resources skipping indication, skips, during a configured-resources skipping time period,
to perform base station processes that correspond to the one or more processes to be skipped by the UE.
